# EUROPEAN PATENT SPECIFICATION

(11) **EP 4 473 527 B1**
(45) Date of publication and mention of the grant of the patent: **28.10.2026**
(21) Application number: 23817384.3
(22) Date of filing: 30.11.2023
(51) Int. Cl.: G10K 9/13, G10K 15/02, G10K 13/00, G10K 5/02, B60Q 5/00, H04R 9/06, H04R 31/00, H04R 7/00

(54) **HORN APPARATUSES AND ASSOCIATED METHODS**
HORNVORRICHTUNGEN UND ZUGEHÖRIGE VERFAHREN
DISPOSITIF D'AVERTISSEUR SONORE ET PROCÉDÉS ASSOCIÉS

(30) Priority: 02.12.2022 GB 202218124; 02.12.2022 GB 202218125
(43) Date of publication of application: 11.12.2024
(73) Proprietor: PSS Belgium NV, 9200 Dendermonde (BE)
(72) Inventor: VUINE, Fabian, 9200 Dendermonde (BE)
(74) Representative: Mewburn Ellis LLP
(86) International application number: PCT/EP2023/083767
(87) International publication number: WO 2024/115672

(56) References cited:
- WO-A1-2022/128595
- WO-A1-2022/189546
- JP-A- 2010 258 537
- US-A- 4 315 557
- US-A1- 2019 200 110

## Description

### Field of the Invention

The present invention relates to horn apparatuses and associated methods.

### Background

Most automotive vehicles are equipped with a horn apparatus for producing an audible warning sound to alert other road users. A typical audible warning sound produced by a horn apparatus is easily recognized by people as a vehicle horn and, worldwide, people have grown accustomed to how vehicle horns sound.

One type of horn apparatus typically used in a vehicle is an electromechanical apparatus comprising a metal disc under the control of a solenoid. The metal disc is configured to ring and produce sound when a contact between the disc and the solenoid is broken. Typically the contact between the disc and the solenoid is broken 400-500 times per second. This can also be described as a hammer knocking on the metal disc, leaving the disc to resonate before interrupting the sound by knocking on the disc again. An electromechanical horn apparatus of this type can wear out quickly.

Another type of horn apparatus sometimes used in a vehicle is configured to electrically switch (e.g. using a MOSFET) the current to the solenoid. Such vehicle horns are typically louder, and more durable because the contact does not need to be mechanically broken. However, these horns are much more expensive than traditional electromechanical vehicle horns.

Yet another type of horn apparatus used in a vehicle may be pneumatically activated wherein an air-tank is filled with compressed air which is then released along a reed thus forcing the reed to oscillate and produce the audible warning sound. However, the pneumatically activated vehicle horns are only economically viable if the compressed air is already available on the vehicle, for example in heavy goods vehicles, or if the required sound pressure level for the audible warning sound is very high, for example for emergency vehicle horns.

A horn apparatus as described above may be referred to as a "single tone" horn apparatus, as it will typically produce sound at a single fundamental frequency. The sound produced by such a "single tone" horn apparatus may similarly be referred to as "single tone" vehicle horn sound. A common arrangement is a "dual tone" horn apparatus, which uses two "single tone" horn apparatuses each tuned to provide sound at a different fundamental frequency, wherein the two fundamental frequencies are spaced at minor intervals apart (e.g. 420Hz and 500Hz). The sound produced by such a "dual tone" horn apparatus may be referred to as a "dual tone" vehicle horn sound. A "dual tone" horn apparatus can be useful for producing a more noticeable audible warning sound to the human ear, compared with a "single tone" horn apparatus.

Another type of horn apparatus used in a vehicle includes a loudspeaker, typically an electrodynamic loudspeaker. Such a horn apparatus may be referred to as an "loudspeaker-based" horn apparatus (in ECE-28 it is referred to as an "electronic horn"). In such examples, the loudspeaker is configured to produce an audible warning sound based on an audio signal, which is typically stored in memory and provided to the loudspeaker via an amplifier. This audio signal may be a recording of an audible warning sound produced by a conventional horn apparatus (e.g. a "dual tone" vehicle horn sound, as described above) and as such, may contain multiple frequencies for playback by the loudspeaker simultaneously. The present inventor has observed that in such an audio signal, the fundamental frequency of the signal is not fixed electronically or mechanically and, therefore, the frequency spectrum of the audio signal may be adjusted freely within the limits of the loudspeaker.

In some examples, the sound pressure level (SPL) output of a horn apparatus for a vehicle may be increased by including a trumpet-like funnel to shape the spectrum of the audible warning sound to be louder at higher frequencies where the human ear is most sensitive. The inclusion of a funnel may also increase the directivity of the audible warning sound.

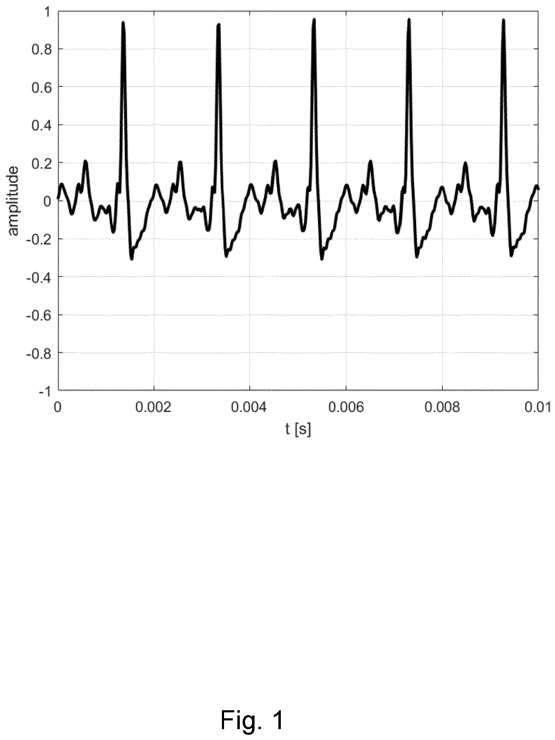

Fig.1 shows a time recording of a typical "single tone" vehicle horn sound which is normalized to a digital range between -1 and 1. The present inventor has observed that, due to the impulsive nature of the mechanical sound generation, a traditional "single tone" vehicle horn sound has a high crest factor. Crest factor is defined in more detail below, but in essence, this means that the audio signal representing the "single tone" vehicle horn sound includes short but very high impulses of sound followed by quiet passages. This leads to a large ratio between peak sound pressure level (SPL) and average SPL.

The present inventor has observed that, in some jurisdictions, a loudspeaker for use in a vehicle alerting system is legally required to produce a combined, A-weighted SPL (sound pressure level) in the 1/3 octave frequency bands 2khz, 2.5kHz and 3.15kHz to be no less than 105dB measured under anechoic conditions in 2m distance on the principle axis of the device. See, for example, Regulation No 28 of the Economic Commission for Europe of the United Nations (UN/ECE) - "Uniform provisions concerning the approval of audible warning devices and of motor vehicles with regard to their audible signals", referred to herein as "ECE-28".

Loudspeaker-based horn apparatuses comprising dedicated digital storage and a dedicated amplifier are typically optimized for outputting an audible warning sound at mid frequencies at the required SPL. To provide sound at the required SPL levels, the electrodynamic loudspeaker used in a conventional loudspeaker-based horn apparatus is typically a compression driver loudspeaker with a comparably small diaphragm of no more than 60mm diameter radiating via a phase alignment portion into a funnel portion increasing the output at mid and high frequencies. Such loudspeakers require a strong and expensive motor system and a moving assembly with very low moving mass. Passing automotive validation tests with such a fragile diaphragm membrane is not trivial and requires additional measures to protect the diaphragm, e.g. by shielding the diaphragm from the environment using finely woven and expensive meshes.

Slow driving electric vehicles produce too little noise to be noticed by pedestrians which poses a safety issue, particularly in front of schools, at pedestrian crossings or traffic lights. Legislation has been adapted to address this matter by making mandatory the generation of an artificial sound. Acoustic Vehicle Alerting Systems ("AVAS" systems) are known systems which are designed to emit this artificial sound to alert pedestrians to the presence of electric drive vehicles. These include hybrid (HEVs), plug-in hybrid (PHEVs), and full battery electric vehicles (BEVs) travelling at low speeds, especially in the lowest speed range below which the noise generated by rolling tires can no longer be easily heard.

The present inventor has observed that it may be desirable to use the Acoustic Vehicle Alarming System of a vehicle for producing an audible warning sound, typically produced by a dedicated horn apparatus. This would allow vehicle manufacturers to remove the separate traditional (i.e. non-loudspeaker-based) "single tone" or "dual tone" horn apparatus from the vehicle, reducing system complexity, cost, and weight.

However, the present inventor has observed that the loudspeaker typically used in loudspeaker-based vehicle horn, as described above, is not capable of producing the output levels in the lower frequency range (e.g. 150...300Hz) required for an AVAS loudspeaker at acceptable distortion levels. Hence, a conventional loudspeaker-based horn apparatus cannot easily be used as an AVAS loudspeaker.

Traditional AVAS loudspeakers may have a nominal diaphragm size between 50 to 170 mm and a free air resonance frequency in the range 50 -150Hz. Therefore, traditional AVAS loudspeakers are typically optimized for low frequency output. These loudspeakers are not typically capable of producing the output levels required for a horn apparatus in the relevant frequency range without resulting in unacceptable levels of sound distortion. Hence, a conventional AVAS loudspeaker cannot easily be used as a vehicle horn without significantly distorting the sound.

There are some known examples in which the warning functionality of AVAS is combined with a vehicle horn, for example, see US10406976B2, FR2983025, US2020/070719. However, such examples typically comprise separate loudspeakers configured to produce different frequency ranges requiring multiple amplifier channels or a passive cross-over network. Other example loudspeaker arrangements capable of meeting the required SPL requirements of both a horn apparatus and AVAS system are public address type systems such as PA loudspeakers with large neodymium magnets or very large ferrite magnets. Therefore, these systems generally have a limited bandwidth or require a lot of input power, or they require a large amount of rare earth magnet material, are very heavy, or are very large in size. In many cases it would be impractical or not economically viable to incorporate such systems into a typical automobile.

When setting up a loudspeaker-based horn apparatus according to the requirements of ECE-28, it must be accompanied by an audio amplifier and an audio signal to be played back. The present inventor has observed that the choice of all three components, signal, amplifier and loudspeaker must be such that the 105dBA requirement mentioned above, in the relevant frequency bands in 2m can be achieved. The present inventor has observed that the high crest factor of a recording of a typical "single tone" or "dual tone" vehicle horn sound means that, if such a recording were used as the audio signal to be played back by a loudspeaker-based horn apparatus, then meeting the requirements of ECE-28 using a conventional AVAS loudspeaker would require a very large amplifier and a high input voltage which would result in significant audible distortion of the horn sound.

The present invention has been devised in light of the above considerations.

### Summary of the Invention

The present invention provides a horn apparatus according to claim 1.

Advantageously, the present inventor has found that by using a loudspeaker in a horn apparatus to produce an audible warning sound based on an audio signal that has crest factor below a predetermined threshold of 6dB or lower, a smaller, cheaper, and lighter loudspeaker may be used to reproduce an audible warning sound at a higher SPL than might otherwise be achieved if an audio signal having a higher crest factor was used with the same loudspeaker.

In addition, the diaphragm and surround being formed of a single piece of material, is useful for facilitating piston-like movement of the diaphragm and desirable sound output. The present inventors have found that this piston-like movement of the diaphragm is a particularly efficient arrangement for producing sound at a high sound pressure levels (SPL), e.g. as may be useful for an AVAS system (and horn apparatus).

The loudspeaker may be configured to produce an audible warning sound based on an audio signal that has a crest factor that is below a predetermined threshold of 5dB or lower, 3dB or lower, or in some examples 1dB or lower. Ensuring the crest factor of the audio signal is at such low levels facilitates generation of the audible warning sound by the loudspeaker at a higher SPL than might otherwise be achieved with an audio signal having a higher crest factor. In this context, the crest factor that is below an above-defined predetermined threshold may be the crest factor of the audio signal prior to the audio signal being provided to terminals of the loudspeaker, e.g. when the audio signal is in a digital form (e.g. as stored in a recording medium or as synthesized by the horn apparatus), noting that the crest factor of the audio signal will likely increase when converted from the digital to the analogue domain. For avoidance of any doubt, it is possible for the audio signal to be provided to terminals of the loudspeaker with a crest factor that is below some of the lower predetermined thresholds described above (e.g. 5dB, 3dB), though this would require particular care/attention/expense to be taken with the circuitry used to provide the audio signal to the loudspeaker terminals, and hence it might not be commercially viable to do this.

The crest factor of the audio signal may be as measured when the audio signal is in a digital form, e.g. as recorded in a recording medium.

For example, the audio signal may have a crest factor of 3dB or lower when in digital form (e.g. when stored in digital form).

The horn apparatus may include a recording medium which stores the audio signal (e.g. in digital form). The crest factor of the audio signal stored in the recording medium (e.g. in digital form) may have a crest factor of 3dB or lower.

In some examples, the horn apparatus may comprise a recording medium which stores the audio signal. In other examples, the horn apparatus may comprise an apparatus for synthesizing the audio signal "on the fly", i.e. in real time such that the audio signal is synthesized when needed, without the audio signal or composite audio signal having to be stored in a recording medium. The audio signal or composite audio synthesized "on the fly" may be a digital electrical signal that has a crest factor that is 3dB or lower or an analogue electrical signal that has a crest factor that is 6dB or lower.

The audio signal may be configured to mimic a single tone or multitone vehicle horn sound. Here we note that an audio signal obtained as a simple recording of a single tone or multitone vehicle horn sound would typically have a crest factor above 6dB, and therefore would not be as advantageous as an audible warning signal as an audio signal that has a crest factor that is below a predetermined threshold of 6dB or lower.

The audio signal may include at least (or in some examples may only include) one fundamental frequency and harmonics thereof.

The audio signal may include two fundamental frequencies and harmonics thereof, wherein the two fundamental frequencies are separated by no more than half an octave (i.e. 1 < f_{H}/f_{L} ≤ 1.5, where f_{H} is the higher fundamental frequency and f_{L} is the lower fundamental frequency.) This may be useful if there is one additional audio signal, and the audio signal and additional audio signal are intended e.g. to mimic a dual tone vehicle horn.

The audio signal may be an audio signal or composite audio signal produced by a method according to the disclosure useful for understanding the invention (set out below). That is, the audio signal may be an audio signal or a composite audio signal according to the second aspect of the disclosure useful for understanding the invention (set out below). Any one or more of the optional features described in connection with the disclosure useful for understanding the invention may optionally be included in the method.

In some examples, it is preferable that no more than three, preferably no more than two (in some examples no more than one), of the 1/3 octave band levels for the audio signal in the frequency range 400Hz to 10kHz deviate from an average level across the 1/3 octave bands in the frequency range 400Hz to 10kHz by more than +-15dB. Advantageously, the present inventors have found that such an audio signal is suitable for convincingly mimicking a single tone or multi tone (particularly a dual tone) car horn when played back by a loudspeaker.

The horn apparatus may be configured to perform as an Acoustic Vehicle Alerting System (AVAS). A horn apparatus that is also configured to perform as an Acoustic Vehicle Alerting System (AVAS) may be referred to herein as a Horn plus Acoustic Vehicle Alerting System (HAVAS). Having a single apparatus that performs as both a horn apparatus as well as an AVAS can save weight and cost when implementing a vehicle horn and an AVAS system in a vehicle.

The horn apparatus may include multiple loudspeakers, wherein each loudspeaker is configured to produce sound based on a respective audio signal in response to the horn activation mechanism being operated by a user of the vehicle. Each audio signal may have a crest factor that is below an above-defined predetermined threshold (e.g. of 6dB or lower). For example, the horn apparatus may include a first loudspeaker configured to produce sound based on an audio signal as described herein (e.g. an audio signal according to the second aspect of the disclosure useful for understanding the invention), and a second loudspeaker configured to produce sound based on an additional audio signal as described herein (e.g. an additional audio signal according to the second aspect of the disclosure useful for understanding the invention, wherein the audio signal and the additional audio signal have different fundamental frequencies (e.g. as described in connection with the disclosure useful for understanding the invention)).

The additional audio signal may be different to the audio signal which is provided to the first loudspeaker. For example, the audio signal provided to the first loudspeaker assembly may comprise a first fundamental frequency and harmonics thereof and the additional audio signal provided to the additional loudspeaker assembly may comprise a second fundamental frequency and harmonics thereof.

The fundamental frequencies of the audio signal and the at least one additional audio signal may in some examples be separated by no more than half an octave (i.e. 1 < f_{H}/f_{L} ≤ 1.5, where f_{H} is the higher fundamental frequency and f_{L} is the lower fundamental frequency). This may be useful if there is one additional audio signal, and the audio signal and additional audio signal are intended e.g. to mimic a dual tone vehicle horn. In this example, the audible warning sound based on the audio signal produced by the first loudspeaker assembly may be combined outside of the vehicle with a second audible warning sound based on the additional audio signal produced by the additional loudspeaker assembly to provide a composite audio signal, e.g. to mimic a dual tone vehicle horn.

The horn apparatus may be configured to produce sound which conforms with the sound pressure levels (SPL) specified in the United Nations Regulation ECE-28 for acoustic warning devices or acoustic warning systems.

For example, the horn apparatus may be configured to produce sound which has a combined, A-weighted SPL (sound pressure level) in the 1/3 octave frequency bands with the centre frequencies 2khz, 2.5kHz and 3.15kHz must be no less than 105dB measured under anechoic conditions or above a reflective surface in 2m distance on the principle axis of the horn apparatus.

For example, the horn apparatus may be configured to produce sound which has an A-weighted sound pressure level (SPL) of at least 87dBA measured 7m from the front of the vehicle at any chosen height between 50cm and 1.5m above the ground.

The longest dimension of the surround and the diaphragm in a direction perpendicular to the movement axis may be 200mm or lower, more preferably 160mm or lower, more preferably 140mm or lower.

The diaphragm may have a dished shape. For example, the diaphragm may include a cone-shaped portion which is substantially in the shape of an open cone and has a cone opening angle in the range 60° to 160°. As an open cone, this means what would be the 'tip' of the cone is missing. Accordingly the cone opening angle is measured as the angle between the side walls of the cone-shaped portion. Preferably the cone opening angle is in the range 90° to 130°. **It** will be recognised that preferably those side walls of the cone-shaped portion are straight/flat; that is, that the cone angle does not vary in the radial direction.

The cone-shaped portion may have a longest dimension in a direction perpendicular to the movement axis in the range 40mm to 180mm.

The present invention provides loudspeakers with a relatively large axial stiffness and relatively low moving mass. This can lead to them having a high resonance frequency. Typical values for embodiments in which longest dimension of the surround and the diaphragm is in the range of 100mm to 150mm are within the octave of 400Hz to 800Hz.

Such a high resonance frequency is useful when the loudspeaker is being used in a horn apparatus for a vehicle because the resonance frequency may be tuned to the frequency range where the fundamentals of vehicle horn sounds lie (typically 400 to 600Hz), decreasing the real power at the loudspeaker in this range due to the impedance peak around resonance.

The audio signal may be provided to the loudspeaker as a voltage waveform having a peak voltage of no more than 20V (more preferably no more than 16V, more preferably no more than 12V).

The power consumed by the loudspeaker when generating the audible warning sound may be 100W or lower, more preferable 75W or lower, more preferably 50W or lower, more preferably 30W or lower.

The loudspeaker may be configured to produce sound which radiates outwardly from the vehicle by mounting the loudspeaker on an exterior of the vehicle such that the loudspeaker radiates sound directly to the exterior of the vehicle. In other examples, the loudspeaker may be configured to produce sound which radiates outwardly from the vehicle by mounting the loudspeaker in an interior of the vehicle and guiding sound produced by the loudspeaker to the exterior of the vehicle, e.g. via a waveguide, pipe, or other aperture in the vehicle. Herein, a loudspeaker with at least part of the loudspeaker exposed to a region external to the vehicle, i.e. not inside the vehicle, may be considered to be mounted on an exterior of the vehicle.

In some examples, the frame may be configured to be installed in a vehicle. In other examples, the frame may be an integral part of a component of a vehicle, e.g. an integral part of a housing configured to be installed in a vehicle.

In some examples, the frame may be provided in the form of a box which is acoustically sealed except for the diaphragm covering one side of it.

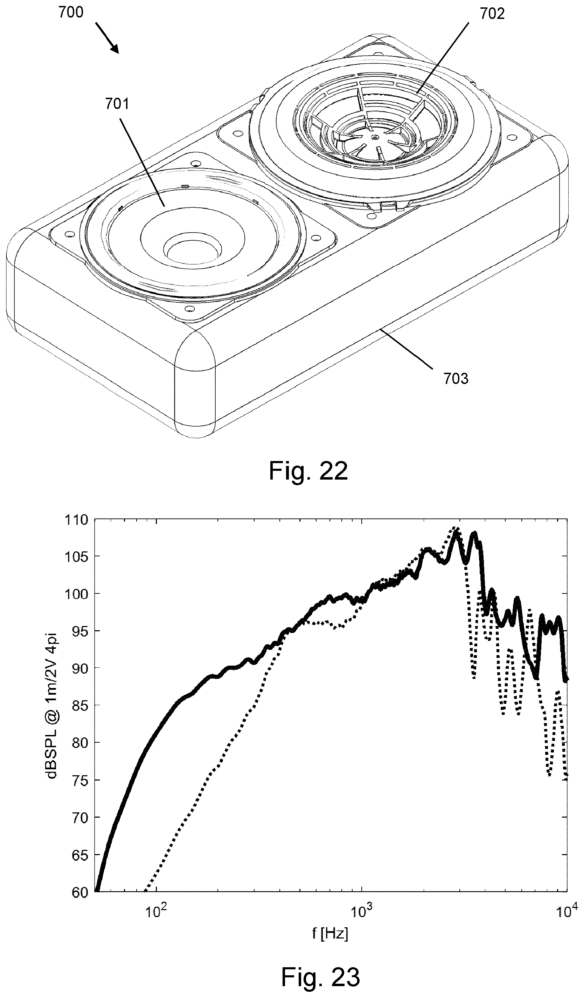

The loudspeaker assembly may be mounted on a box that also includes a passive radiator (see e.g. Fig. 22).

In order for the loudspeaker to be more suitable for outdoor use, it may further comprise a grille positioned in front of the front face of the diaphragm, with a rear face of the grille facing in the rearwards direction toward the front face of the diaphragm, and with a front face of the grille facing in the forwards direction; wherein the grille is configured to permit sound produced by the front face of the diaphragm to pass through the grille when the loudspeaker is in use, and to inhibit the ingress of water incident on the front face of the grille from entering into a space enclosed between the rear face of the grille and the front face of the diaphragm.

The grille may be configured as defined in WO2022189546A1.

Preferably, the first radial eigenfrequency of the diaphragm is in the range 2kHz to 6kHz. This may be achieved by appropriate choice of parameters for the diaphragm.

The single piece of material may comprise a single-layer woven fabric of orthogonal woven fibres and a thermoset resin. For example, suitable materials for the diaphragm and surround include glass fiber, carbon fiber or poly-paraphenylene terephthalamide (Kevlar) and a matrix or coating of thermoset resin such as epoxy or phenolic resin.

Of that woven fabric, the weaving pattern is preferably a canvas or twill, and may suitably use the same thread count for the warp and the weft. That thread count may be, for example, 20-100 threads per inch (tpi), and preferably is 30-60 tpi.

In other examples, the single piece of material may comprise a polymer. For example the diaphragm may be formed by vacuum-forming or by injection molding. Suitable diaphragm materials comprising a polymer may include but are not limited to: Polypropylene, optionally with one or more filler materials such as glass fibers, talcum, MICA etc, which may be uniaxially or biaxially oriented; Polycarbonate, optionally with one or more filler materials; Acrylonitril-butadieen-styreen, optionally in blends with other materials such as PC-ABS; Polyethyleentereftalaat, which may be uniaxially or biaxially oriented (e.g. Mylar^{®}); Polyvinylchloride; Polyethylene naphthalate; Polyethylene terephthalate; Polyethylene terephthalate; Biaxially oriented Polyethylene terephthalate; Polyetherimide; and Polyether ether ketone.

In further examples, the diaphragm may be made from a non-woven composite such as paper, which includes a coating formed from a waterproof material.

The diaphragm may include tangentially extending pleats at the perimeter of the diaphragm. This is useful to facilitate the excursion capability of the diaphragm whilst preventing collapse of the diaphragm when the cone is moving towards the drive unit.

The material of the diaphragm and surround may suitably have a specific mass in the range 50g/m2 to 500g/m2, and it may preferably be in the range 500g/m2 to 300g/m2. Moreover, it may suitably have a bulk density in the range 0.5g/cm3 to 1.8g/cm3, and preferably 0.6/cm3 to 1.6g/cm3.

The thickness of the material of the diaphragm and surround may suitably be in the range 0.03 to 0.6 mm, preferably 0.05 to 0.3 mm, more preferably 0.1 to 0.3 mm, and more preferably in the range 0.1 to 0.2 mm.

The voice coil may have a width (e.g. diameter) as measured in a direction perpendicular to the movement axis that is between 25mm and 40mm.

The diaphragm may have a width (e.g. outer diameter) as measured in a direction perpendicular to the movement axis that is between 100mm and 150mm.

The effective radiating area of the diaphragm may be in the range 50cm² to 150cm². For a circular geometry, the effective radiating area may be calculated from a diameter which extends from half surround to half surround. For more complex geometries, the effective radiating area of the diaphragm may be calculated by, for example, the technique described in https://www.klippel.de/fileadmin/klippel/Files/Know_How/Application_Notes/AN_32_Effective_Radiation_ Area.pdf.

**It** will be recognised that the thickness of the material may be taken as corresponding to its smallest dimension, which may be broadly in the direction parallel to the movement axis (dependent on shape).

The Young's modulus of the material of the diaphragm and surround is also found to be a relevant factor in optimising piston-like movement, in combination with the other factors considered here. For the loudspeakers of the present invention, the Young's modulus of the material of the diaphragm and surround may suitably be in the range 2 to 15 GPa, preferably in the range 2 to 8 GPa and more preferably in the range 2 to 6 GPa. However, for many materials (for example where woven fibers are included), the Young's modulus may vary depending on the direction of measurement. Accordingly in some embodiments that material has the Young's modulus mentioned above in at least one direction; and in some embodiments in all directions.

These properties may help further provide a diaphragm and surround material which has enough stiffness to permit piston-like movement of the diaphragm (retaining its shape in motion) with flexibility to allow the surround portion to facilitate such piston-like movement.

A dustcap may be provided integral with the diaphragm or separate and joint to the cone or voice coil, e.g. by means of an adhesive.

It will be apparent that, while the diaphragm and surround are made of a single piece of material (that is, are unitary), there may be some manufacturing variation in properties of that material across the diaphragm and surround. Preferably the material has a substantially uniform or homogenous thickness and Young's modulus.

The loudspeaker assembly may include a second suspension. When the loudspeaker assembly incudes a second suspension, a majority of the total stiffness of the loudspeaker assembly may be provided by the surround. Including a second suspension may simplify the manufacturing process and increase reliability of the loudspeaker.

The second suspension may be an inner suspension portion wherein the diaphragm extends between the surround and the inner suspension portion. The inner suspension portion may be integral with the remainder of the diaphragm.

The surround may be attached to the frame at a first attachment location such that the diaphragm is suspended from the frame via the surround, wherein the first attachment location has a first position along the movement axis. The inner suspension portion may be attached to the frame at a second attachment location such that the diaphragm is suspended from the frame via the inner suspension portion, wherein second attachment location has a second position along the movement axis. The first position along the movement axis may be separated from the second position along the movement axis.

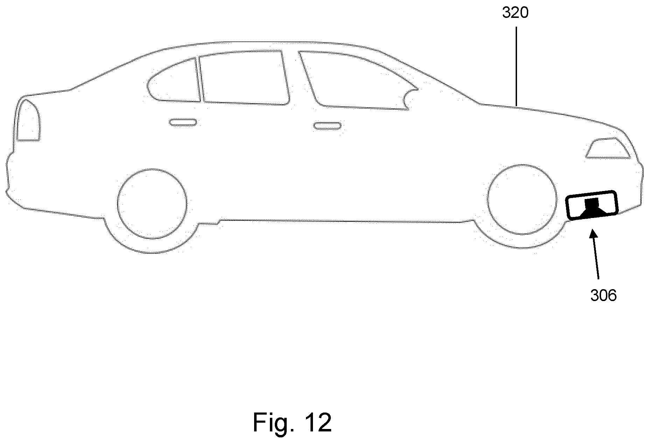

Having a diaphragm an inner suspension portion and an outer suspension portion (i.e. the surround) which are integral with the diaphragm helps to save on cost and complexity (e.g. fewer gluing operations, fewer components), resulting in a loudspeaker assembly that is cheap and simple to produce, and helps to inhibit water ingress at joints. This may be particularly useful for the horn apparatus of the second invention in which the loudspeaker assembly is mounted on an exterior of the vehicle, or is otherwise exposed to an exterior of the vehicle (e.g. as for the loudspeaker shown in Fig. 12).

Moreover, by having the first position and second position separated along the movement axis, which means that the location at which the outer suspension portion is attached to the chassis is separated from the location at which the inner suspension portion attaches the chassis (in a direction parallel to the movement axis), it is possible for the loudspeaker assembly to inhibit problematic rocking motions, without the need for a damper.

The first position along the movement axis may be separated from the second position along the movement axis by a distance (h) of at least 10mm, preferably at least 15mm. Such a distance helps to inhibit problematic rocking motions, without the need for a damper.

The loudspeaker assembly may include any of the optional features disclosed in WO2022253702A1.

The loudspeaker assembly may include any of the optional features disclosed in WO2022253924A1.

### Disclosure useful for understanding the invention

In a first aspect of a disclosure useful for understanding the invention, there is provided:
A method of synthesizing an audio signal for use by a horn apparatus for a vehicle to produce an audible warning sound, wherein the audio signal contains a fundamental frequency and harmonics corresponding to the fundamental frequency, the method including:
selecting weights for each of a plurality of harmonics corresponding to a fundamental frequency;
using the selected weights to synthesize a precursor audio signal from only the fundamental frequency and the plurality of harmonics;
compressing the precursor audio signal one or more times to provide an audio signal which has a crest factor that is below a predetermined threshold.

Surprisingly, and without wishing to be bound by theory, the inventor has found that by synthesizing the precursor audio signal from only the fundamental frequency and a plurality of harmonics corresponding to the fundamental frequency, the resulting (compressed) audio signal is less prone to distortion when reproduced by a loudspeaker, in contrast to a more complex audio signal that has undergone the same compression process. This allows the (compressed) audio signal to be reproduced by a loudspeaker with increased SPL (e.g. as measured using 1/3 octave band levels), compared with the original (uncompressed) audio signal, without a corresponding increase in distortion (as perceived by a listener) that would normally be expected following the compression process. This allows for a smaller loudspeaker to be used to reproduce the (compressed) audio signal as an audible warning sound at an SPL level that might otherwise only be achieved using a larger or otherwise more powerful loudspeaker.

Here, "distortion" of sound may be taken to mean the distortion of that sound as perceived by a listener. In this context, all loudspeakers may be understood as introducing at least a small level of distortion to a sound, compared with the audio signal the loudspeaker is seeking to reproduce. However, by synthesizing the audio signal according to the present disclosure useful for understanding the invention, the distortion introduced by a loudspeaker producing sound based on the audio signal has been found to be less apparent to a listener compared with an audio signal containing multiple fundamental frequencies that has undergone the same compression process. Without wishing to be bound by theory, it is believed this is because the precursor audio signal undergoing the compression process includes only one fundamental frequency (and harmonics thereof). As such, when reproducing the audio signal, it is believed that the loudspeaker creates mainly harmonic distortion related to the inductance, force factor and suspensions displacement nonlinearity. As the audio signal contains only one fundamental frequency and harmonics thereof, it is believed that all harmonic distortion generated by the loudspeaker coincides with the harmonic frequencies already present in the audio signal and merely increases their relative weight, rather than increasing distortion.

Herein, the crest factor, *CF*[*dB*], of an audio signal may be defined as the logarithmic ratio of the maximum value of the audio signal divided by the root-mean-square (RMS) value of the audio signal. For an audio signal provided as a digital waveform *xₙ* having samples n=0....N, the crest factor, *CF*[*dB*], of an audio signal may be defined as $CF \left[dB\right] = 20 {log}_{10} \left(\frac{max \left|{x}_{n}\right|}{\sqrt{\frac{1}{N} {\sum }_{n = 0}^{N - 1} {{x}_{n}}^{2}}}\right)$ (1)

For an audio signal provided in analogue form (e.g. as a sound, or as an analogue electrical signal), the crest factor may be calculated by capturing the audio signal in digital form (e.g. by capturing the audio signal as an analogue electrical signal using an oscilloscope with an analogue-to-digital converter connected to the terminals of a loudspeaker to which the audio signal is provided) and calculating the crest factor of that captured audio signal according to the equation as defined above.

In theory it would also be possible to capture an analogue signal in digital form by recording the audio signal as produced by a loudspeaker using a microphone, though in general, the crest factor of an audio signal captured in this way would become very large owing e.g. to phase shifts due to different temperatures and air flow, so normally the crest factor of an audio signal captured in this way would not be 6dB or lower, even if the original audio signal provided to the terminals of the loudspeaker did have a very low crest factor.

Herein, "compressing" an audio signal may be taken to mean reducing the overall dynamic range of the audio signal by narrowing the difference between the loudest and softest parts of an audio signal. Accordingly, compression of an audio signal has the effect of reducing the crest factor of the signal. Compression of the audio signal may also be referred to herein as "clipping" or "non-linear clipping" of the audio signal because of the way in which compression reduces the size of larger peaks in the audio signal relative to smaller peaks in the audio signal. For illustration, two compression methods are described herein, but many other compression methods exist and the present disclosure useful for understanding the invention should not be construed as being limited to a specific compression technique, since many such techniques are known.

Herein, a "harmonic" of a fundamental frequency may be understood as an integral (whole number) multiple of the fundamental frequency. Herein a "fundamental" frequency in an audio signal may be understood as the lowest frequency contained in the audio signal that is the common denominator of the harmonic frequencies. The fundamental frequency may be referred to as *f*₁, with each harmonic referred to as *f*₂ (second harmonic), *f*₃ (third harmonic) and so on.

The predetermined threshold for the crest factor is 6dB or lower, preferably 5dB or lower, preferably 3dB or lower, or in some examples 1dB or lower.

For reasons discussed below in more detail, the audio signal or composite audio signal may have a crest factor that is very low (e.g. 3dB or lower) when in digital form (e.g. when stored in digital form), but the crest factor of that same signal may be increased somewhat (e.g. to closer to 5dB or 6dB) when measured at the terminals of a loudspeaker. Preferably, the crest factor of the audio signal as measured at the terminals of a loudspeaker configured to reproduce the audio signal is 6dB or lower.

The audio signal may be configured to mimic a single tone vehicle horn sound (which typically includes a fundamental frequency and harmonics thereof). For example, the weights for each of the plurality of harmonics corresponding to the fundamental frequency may be selected so that the precursor audio signal (and consequently the (compressed) audio signal) mimics a single tone vehicle horn sound. Additionally/alternatively, the compressing step(s) may be configured so that the (compressed) audio signal) mimics a single tone vehicle horn sound.

The fundamental frequency may be between 100Hz-800Hz, more preferably between 200Hz-600Hz. These frequencies are useful fundamental frequencies in the human hearing range for use in a vehicle horn and correspond to the frequencies which are typically present in a recognisable vehicle horn sound.

The method according to the disclosure useful for understanding the invention may further include synthesizing at least one additional audio signal using a method according to the first aspect of the disclosure useful for understanding the invention, wherein the audio signal and the additional audio signal have different fundamental frequencies.

The fundamental frequencies of the audio signal and the at least one additional audio signal may in some examples be separated by no more than half an octave (i.e. 1 < f_{H}/f_{L} ≤ 1.5, where f_{H} is the higher (or highest) fundamental frequency and f_{L} is the lower (or lowest) fundamental frequency). This may be useful if there is one additional audio signal, and the audio signal and additional audio signal are intended e.g. to mimic a dual tone vehicle horn.

The audio signal may be combined with (e.g. summed, or combined in some other manner, e.g. weighted sum) the at least one additional audio signal to provide a composite audio signal. The resulting composite audio signal may mimic a multitone (e.g. dual tone) vehicle horn

If there is one additional audio signal, the audio signal may be combined with (e.g. summed, or combined in some other manner, e.g. weighted sum) the additional audio signal to provide a composite audio signal which mimics a dual tone vehicle horn.

Advantageously, compressing the audio signal and the at least one additional audio signal separately and then forming the composite audio signal can reduce the overall distortion of the composite signal compared to if the compression step(s) were applied to the composite audio signal. Without wishing to be bound by theory, it is believed this is because compression of a composite audio signal containing multiple fundamental frequencies and harmonics thereof results in undesirable additional frequencies being created which creates unpleasant distortion when reproduced by a loudspeaker.

The composite audio signal may optionally be (further) compressed to decrease the crest factor of the composite audio signal. This additional compression step may allow the (further compressed) composite audio signal to be reproduced by a loudspeaker with increased SPL helping to further increase the overall perceived volume of the composite audio signal when it is reproduced by a loudspeaker. However, the present inventor has found that any compression of the composite audio signal is preferably mild, since otherwise an unpleasant amount of distortion can be introduced into the composite audio signal.

The composite audio signal may optionally be normalised (e.g. scaled) to a desired dynamic range. This is useful when the signal is being reproduced by a loudspeaker to ensure that the audio signal is able to use the full loudspeaker range available, thus increasing overall SPL of the audio signal, without being clipped during playback of the audio signal by the loudspeaker.

In some examples, it is preferable that no more than three, preferably no more than two (in some examples no more than one), of the 1/3 octave band levels for the audio signal or composite audio signal in the frequency range 400Hz to 10kHz deviate from an average level across the 1/3 octave bands in the frequency range 400Hz to 10kHz by more than +-15dB. Advantageously, the present inventors have found that synthesizing an audio signal or composite audio signal which is within the above spectrum requirements provides an audio signal or composite audio signal which is suitable for convincingly mimicking a single tone or multi tone (e.g. dual tone) car horn when played back by a loudspeaker. In particular, these spectrum requirements are useful for mimicking a dual tone car horn, and so may be applied to a composite audio signal which is configured to mimic a dual tone vehicle horn sound.

Here, the 1/3 octave bands in the frequency range 400Hz to 10kHz may be taken to be the (fifteen) 1/3 octave bands with centre frequencies 400Hz, 500Hz, 630Hz, 800Hz, 1000Hz, 1250Hz, 1600Hz, 2000Hz, 2500Hz, 3150Hz, 4000Hz, 5000Hz, 6300Hz, 8000Hz, 10000Hz (which are standard nominal centre frequency values for these well-known bands). Here, the level for each of these 1/3 octave bands may be taken to be the RMS signal level for that band.

The average level *̅L̅*̅_̅{̅1̅.̅.̅.̅*̅N̅*̅}̅[*dB*] across the 1/3 octave bands in the frequency range 400Hz to 10kHz may be calculated according to: $\overline{{L}_{1 … N}} \left[dB\right] = 10 ⋅ {log}_{10} \left(\frac{1}{N}{\sum }_{n = 1}^{N} {10}^{\frac{{L}_{n}}{10}}\right)$ where Lₙ is the level of the nth 1/3 octave band in the frequency range 400Hz to 10kHz.

In some examples, a processing device may be used to combine the audio signal with the additional audio signal to provide the composite audio signal, e.g. with sound subsequently being produced by a loudspeaker based on the composite audio signal. The processing device may e.g. be a computer (which may combine the audio signal and additional audio signal via a digital process) or an analogue device which combines the audio signal and the additional audio signal by an analogue process.

In some examples, the audio signal may be combined with the additional audio signal to provide a composite audio signal by a first loudspeaker producing sound based on the audio signal and a second loudspeaker producing sound based on the additional audio signal. In this example, sound reproduced by the first and second loudspeakers combine outside of the first and second loudspeakers to provide the composite audio signal as a sound. The first and second loudspeakers may be located on a vehicle.

For avoidance of any doubt, the audio signal and/or composite audio signal may optionally be augmented by combining the audio signal and/or composite audio signal with one or more supplementary audio signals prior to being reproduced by a loudspeaker, wherein the one or more supplementary audio signals need not be produced by a method according to the first aspect of the disclosure useful for understanding the invention.

The audio signal or composite audio signal may have a crest factor that is 3dB or lower when in digital form (e.g. when stored in digital form, e.g. in a recording medium).

The method according to the first aspect of the disclosure useful for understanding the invention may be implemented in whole or in part by a computer. For example, a computer readable medium may be provided which stores instructions which, when executed by a processor, causes the method to be performed. The processor may be located, for example, in a computer or microchip.

In some examples, the method may be implemented by circuitry comprising signal processing hardware (without necessarily involving a processor).

In some examples, the method may be implemented with a combination of circuitry and instructions executed by a processor.

In some examples, the method may be performed by circuitry which synthesizes the audio signal or composite audio signal "on the fly", e.g. using digital or analogue hardware to synthesize the audio signal or composite audio signal on the fly. The audio signal or composite audio signal synthesized "on the fly" may have a crest factor that is 3dB or lower, if created in digital form (e.g. a digital electrical signal, e.g. as may be stored briefly in the circuitry or memory prior to being converted into an analogue electrical signal which is supplied to the terminals of a loudspeaker). The audio signal or composite audio signal synthesized "on the fly" may have a crest factor that is 6dB or lower, if created in analogue form (e.g. an analogue digital signal).

In a second aspect of the disclosure useful for understanding the invention, there may be provided an audio signal or a composite audio signal produced by a method according to the first aspect of the disclosure useful for understanding the invention, e.g. including any optional features described above. The signal may, for example, be stored in a recording medium or embodied as an electrical signal, or as sound (e.g. as is the case where the composite audio signal is formed by two loudspeakers, as described above).

In a third aspect of the disclosure useful for understanding the invention, there may be provided a recording medium which stores an audio signal or composite audio signal according to the second aspect of the disclosure useful for understanding the invention.

The recording medium may store the audio signal in digital form (e.g. a memory which stores the audio signal as discrete datapoints representing the audio signal), in which case the signal may be reproduced by converting the signal stored in digital form into an analogue signal using an analogue-to-digital converter (ADC) with the analogue signal then being reproduced using a loudspeaker. In some examples, the recording medium may store the audio signal or the composite audio signal a compressed form e.g. as a MPEG-1 Audio Layer 3 (MP3) file. In some examples, the recording medium may store the audio signal in analogue form (e.g. tape, vinyl).

The audio signal or composite audio signal stored in the recording medium may take the form of a short section of audio configured to be repeated (i.e. looped) for a desired length of time, e.g. so as to provide the audible warning sound for a prolonged period. Furthermore, in some examples the recording medium may comprise an additional transient section of audio (which need not be produced according to the method according to the first aspect of the disclosure useful for understanding the invention, and which may e.g. a duration of 200ms or less) after which the audio signal transitions to the looped section of audio.

The recording medium may be located in the horn apparatus for a vehicle according to the invention.

The audio signal or composite audio signal stored in the recording medium (e.g. in digital form) may have a crest factor that is 3dB or lower.

In a fourth aspect of the disclosure useful for understanding the invention, there may be provided an apparatus configured to synthesize an audio signal or composite audio signal according to the second aspect of the disclosure useful for understanding the invention "on the fly", i.e. in real time such that the audio signal or composite audio signal is synthesized when needed, without the audio signal or composite audio signal having to be stored in a recording medium. To achieve this, the apparatus may be configured to perform part of or the entirety of a method according to the first aspect of the disclosure useful for understanding the invention. For example, the apparatus may be configured to perform a method according to the first aspect of the disclosure useful for understanding the invention, optionally modified such that the method uses pre-selected weights for each of the plurality of harmonics, i.e. rather than selecting the weights as part of the method.

The audio signal or composite audio synthesized "on the fly" may be a digital electrical signal that has a crest factor that is 3dB or lower or an analogue electrical signal that has a crest factor that is 6dB or lower.

The loudspeaker of the horn apparatus according to the invention may be configured to produce an audible warning sound based on an audio signal or composite audio signal according to the second aspect of the disclosure useful for understanding the invention in response to the horn activation mechanism being operated by a user of the vehicle.

For avoidance of any doubt, when the audible warning sound produced by the loudspeaker of the horn apparatus according to the invention is based on an audio signal or composite audio signal according to the second aspect of the disclosure useful for understanding the invention, it is possible that the audio signal or composite audio signal may be augmented or otherwise adjusted prior to being supplied to the terminals of the loudspeaker, e.g. according to system requirements. Moreover, the loudspeaker itself may produce a sound that distorts the audio signal or composite audio signal supplied to its terminals.

The horn apparatus according to the invention may be configured to produce sounds other than audible warning sounds. For example, the horn apparatus may be configured to produce any sound suitable for externally propagating from a vehicle, such as a door lock indication or a burglar alarm. In some examples, the horn apparatus may be configured to perform as a PA system for playing audible speech.

### Summary of the Figures

Embodiments and experiments illustrating the principles of the invention will now be discussed with reference to the accompanying figures in which:
**Fig. 1** shows a time recording of a single tone vehicle horn sound.
**Fig. 2** shows a time recording of a dual tone vehicle horn sound.
**Fig. 3** shows a 1/3 octave band spectrum for the audio signal of Fig. 2.
**Fig. 4** shows a time series audio signal as synthesized according to a method according to the present disclosure.
**Fig. 5** shows a 1/3 octave band spectrum for the audio signal of Fig. 4.
**Fig. 6** is a flowchart representing a method of synthesizing a single tone audio signal for use by a horn apparatus.
**Fig. 7** is a flowchart representing a further method of synthesizing a dual tone audio signal for use by a horn apparatus.
**Fig. 8** represents a sine function suitable for audio compression according to one or more aspects of the present disclosure.
**Fig. 9** represents a tanh function suitable for audio compression according to one or more aspects of the present disclosure.
**Fig. 10** shows a time series audio signal before and after audio compression according to one or more aspects of the present disclosure.
**Fig. 11** shows a schematic of an example horn apparatus for a vehicle.
**Fig. 12** shows a car comprising a horn apparatus.
**Fig. 13** shows a cross section view of an example loudspeaker.
**Fig. 14** shows a section of the loudspeaker assembly of Fig.12 including a surround, a diagram and a dust cap attached to a voice coil.
**Fig. 15** shows a plan view of another example diaphragm with an integral dustcap and surround.
**Fig. 16** shows an eigenfrequency simulation for the diaphragm of Fig. 15.
**Fig. 17** shows another example loudspeaker according to the present disclosure.
**Fig. 18** shows a perspective view of another example loudspeaker according to the present disclosure.
**Fig. 19** shows the relative sensitivity gain of the loudspeaker assembly of Fig. 18 compared to a loudspeaker without a grille.
**Fig. 20** shows a frequency response for a loudspeaker according to the present disclosure compared to a conventional AVAS system loudspeaker and a traditional loudspeaker based horn apparatus.
**Figs. 21a****-b** shows a 1/3 octave band spectrum for a loudspeaker according to the present disclosure compared to a traditional electromechanical dual tone car horn.
**Fig. 22** shows a perspective view of another example loudspeaker assembly according to the present disclosure wherein the loudspeaker assembly includes a passive radiator.
**Fig. 23** show frequency responses for the loudspeaker of Fig. 22 compared to the loudspeaker of Fig. 18.

### Detailed Description of the Invention

Aspects and embodiments of the present invention will now be discussed with reference to the accompanying figures. Further aspects and embodiments will be apparent to those skilled in the art.

In the examples that follow, alike features have been given corresponding reference numerals, and corresponding descriptions may apply except where such a description is clearly impermissible or expressly avoided.

Fig. 1 shows a time recording of a typical single tone vehicle horn sound which is normalized to a digital range between -1 and 1, e.g. as might be used by a vehicle as an audible warning sound. In this example, the horn sound may be referred to as a single tone horn sound because it comprises a single fundamental frequency and harmonics of that fundamental frequency.

The audio signal of the single tone vehicle horn sound as depicted in Fig. 1 comprises short but very high impulses of sound which are followed by quiet passages. This leads to a large ratio between peak sound pressure level (SPL) and average sound pressure level. This large ratio between peak and average SPL means that the audio signal as shown in Fig. 1 has a high crest factor. Moreover, the impulsive sound does not lead to a symmetric waveform about the x-axis, but to a strong asymmetry towards either positive or negative side.

As discussed above, two single tone vehicle horn apparatuses are often used as a pair to provide a "dual tone" horn apparatus configured to produce audible warning sounds which are separated by an interval of a minor third. This makes the vehicle horn sound more dissonant to the human ear and increases the alarming character of the audible warning sound.

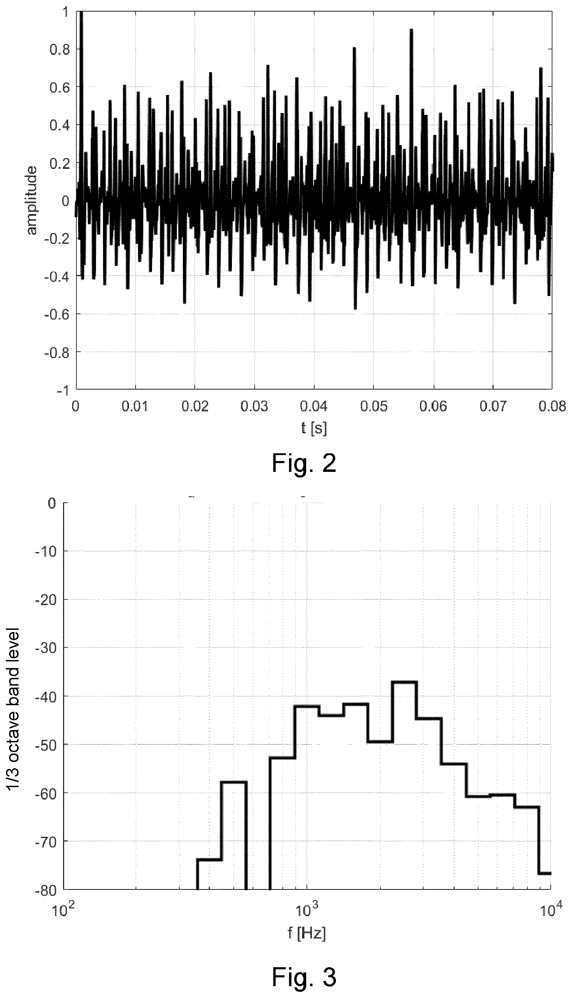

Fig. 2 shows a time recording of a typical dual tone vehicle horn sound which is normalized to a digital range between -1 and 1, e.g. as might be used by a vehicle as an audible warning sound. The audio signal as depicted in Fig. 2 comprises two fundamental frequencies and harmonics thereof. The horn signal of Fig. 2 may be reproduced by a single loudspeaker to mimic a dual tone vehicle horn.

A crest factor *CF*[*dB*] can be calculated for the audio signal to represent the size of the ratio between peak SPL and average SPL of the audio signal, e.g. using equation (1) as set out above.

Using equation (1) as set out above, the calculated crest-factor of the recorded audio signal of Fig. 2 is 14.4dB.

Fig. 3 shows a 1/3 octave band spectrum for the recorded audio signal of Fig. 2. The spectrum shows a peak at approximately 2.5kHz. This is expected for this type of dual tone vehicle horn sound.

According to the United Nations Regulation ECE-28 acoustic warning devices or acoustic warning systems, comprising of two acoustic warning devices, must meet or exceed a combined sound pressure level of 105dBA at 2m distance in the frequency range of the 1/3 octave bands 2kHz, 2.5kHz and 3.15kHz under anechoic conditions or above a reflective floor.

Therefore, a horn apparatus for a vehicle comprising a loudspeaker, an audio amplifier, and a signal source for supplying an audio signal for playback by the loudspeaker must be capable of producing sound at 105dBA in the above-mentioned frequency bands.

A typical AVAS system for producing low frequency sound for an electric vehicle generally comprises an audio amplifier having a 12V peak output voltage and an AVAS loudspeaker having a typical sensitivity of 85dB at 2VRMS in 4 Ohms (wherein 4 Ohms is the nominal impedance of a loudspeaker which has a nominal input power of 1W). Accordingly, the highest peak voltage of a signal amplified by the audio amplifier cannot exceed 12V or it will be clipped, leading to unpleasant distortion.

Therefore, if the audio signal of Fig. 2 (normalised to +-1) is amplified by the 12V audio amplifier of the AVAS system to +-12V, and supplied to the AVAS loudspeaker, the resulting audible warning sound would have an average SPL which is 80dBA or lower at 2m distance. This would not meet the requirement of ECE-28 which is 105dBA. The present inventor has observed this is because the high crest-factor of the typical recorded horn signal limits the amount of that the average SPL (or RMS value) can be increased before the peaks of the signal are clipped. In the given example, with the horn signal having a crest-factor of 14.4dB, the peak voltage required by the loudspeaker to produce the horn signal at sufficient SPL would be 45V, corresponding to 500W peak power. This peak power is too high for a commercially feasible HAVAS system.

The present inventors have devised a method of synthesizing an audio signal for use by a horn apparatus which sounds like a single or multi-tone vehicle horn sound, and yet which has a low crest factor and is further able to avoid unpleasant levels of distortion when that audio signal is used to generate an audible warning sound. By lowering the crest factor of the audio signal, more energy may be transferred by the audio amplifier to increase the average SPL of the resulting audible warning sound, without requiring excessive peak power. By synthesizing the signal according to the method set out below, an unpleasant level of distortion can be avoided, despite the lowered crest factor of the audio signal.

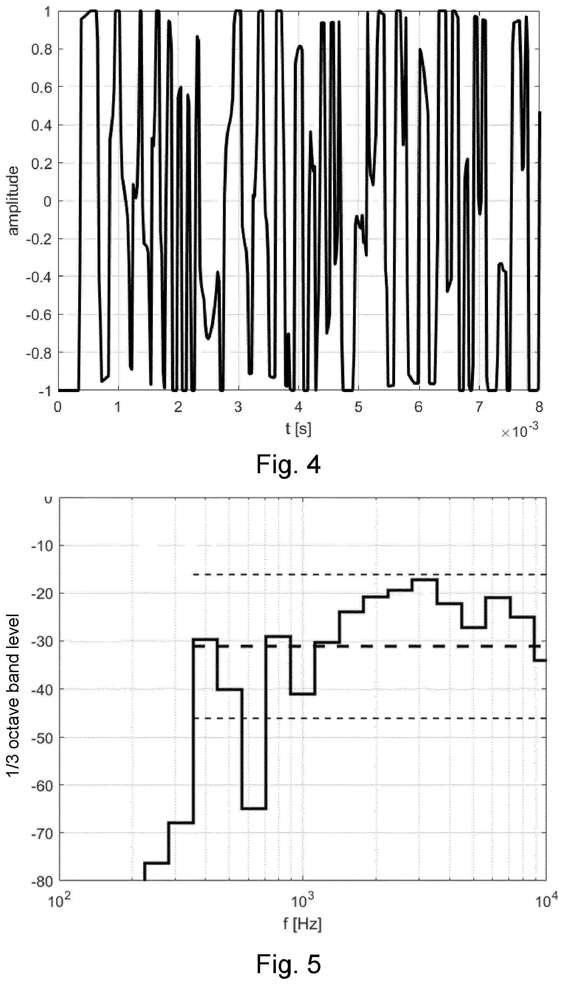

Fig. 4 shows a digital audio signal synthesized according to a method according to the present disclosure. The audio signal has been normalised to a digital range between -1 and 1. The crest factor of the synthesized audio signal in Fig. 4 (when stored in digital form) is 2.4dB, a decrease of 12dB compared to the typical horn signal of Fig. 2.

When the signal of Fig. 4 is converted to an analogue signal and provided to the terminals of a loudspeaker, the crest factor will typically increase somewhat, but will still be much reduced compared with the typical horn signal of Fig. 2. The present inventors have found that an audio signal having a crest factor when measured at the terminals of a loudspeaker between 2dB and 6dB is suitable for use as a horn signal e.g. when provided to an AVAS loudspeaker, which may be referred to as a "HAVAS loudspeaker" (horn plus AVAS) when configured to perform as a vehicle horn as described herein.

Humans are very sensitive to the spectrum of sound and associated timbre. However, phase information is mostly disregarded by the human ear. In the audio signal of Fig. 4 the power of the impulsive sound of the traditional car horn has been redistributed over a wider time span without noticeably affecting the timbre of the sound. Accordingly the audio signal has a dramatically reduced crest factor while still closely resembling the sound of a typical vehicle horn.

Fig. 5 shows a 1/3 octave band spectrum for the audio signal of Fig. 4. As shown in Fig. 5 the average level of the audio signal is increased compared to the typical horn signal of Fig. 3. For example the 1/3 octave band level of the 3.15kHz band has increased from -45dB to -18dB, an increase of 27dB.

The average level of the bands across the 1/3 octave bands in the frequency range 400Hz to 10kHz is shown in Fig. 5 as a thick dashed line. The present inventors have found that a suitable audio signal for use in a horn apparatus preferably comprises no more than two 1/3 octave bands between 400Hz and 10kHz which deviate from the average level by more than +-15dB, noting that these +-15dB deviations are shown by the thin dashed lines in Fig. 5. In Fig. 5 only one 1/3 octave band, namely the 630Hz 1/3 octave band, drops below the -15dB threshold. Therefore a signal with this spectrum is suitable for convincingly mimicking a dual tone car horn when played back via a suitable loudspeaker.

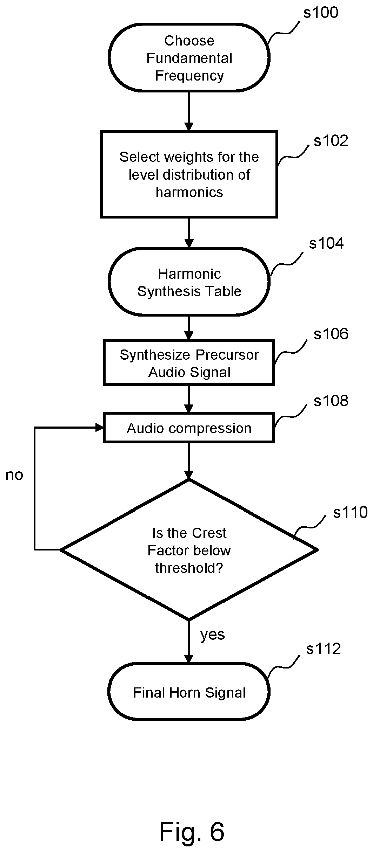

Fig. 6 is a flowchart representing a method of synthesizing an audio signal for use by a horn apparatus according to the invention.

In step s100 of Fig. 6, a fundamental frequency is chosen for the production of a precursor audio signal containing the fundamental frequency and a plurality of harmonics corresponding to the fundamental frequency. The fundamental frequency may be between 250Hz and 600Hz for the production of a typical audible warning sound for a vehicle horn.

In step s102, weights are selected for each of the plurality of harmonics corresponding to a fundamental frequency.

The selected weights represent the relative amplitude of each harmonic in the precursor audio signal and are chosen so that the precursor audio signal represents a vehicle horn sound under anechoic conditions.

The harmonics are defined as multiples of the fundamental frequency given by: ${f}_{k} = k ⋅ {f}_{1} k ϵ ℕ \left\{1,2,3 …K\right\} , K < 20$ where k is an integer and f₁ is the fundamental frequency.

In some examples, the selected weights may include phase angles of the plurality of harmonics given by: ${ϕ}_{k} = \frac{\left(-k\left(k-1\right)π\right)}{k}$ where *ϕₖ* is the phase angle of the k^{th} harmonic in radians.

The phase angles may be chosen randomly in the range 0...2π or defined for each harmonic. The present inventors have found that the phase angles can influence the crest factor of the final synthesized audio signal but have little effect on the tonal character of the final synthesized audio signal (i.e. what the audio signal sounds like to a listener when it is played by a loudspeaker). In general, the present inventor has found that better results are achieved when the phase angles are not all zero or the same value.

Iterating the method of Fig. 6 using different random phase angles can be useful for synthesizing an audio signal with a lower crest factor. However, random iteration can be inefficient with an uncertain outcome. The present inventors have found that choosing phase angles according to *"*Synthesis of low-peak factor signals and binary sequences with low autocorrelation" (Schroeder M R, 1970, IEEE Trans. Inf. Theory vol. 16 pages 85-89) is one possible route to selecting the phase angles to help obtain a synthesized audio signal with a low crest factor.

In step s104, the selected weights and the harmonic frequencies are stored in a harmonic synthesis table for synthesizing the precursor audio signal.

In step s105, the harmonic synthesis table is used to synthesize the precursor audio signal. The precursor audio signal typically has a crest factor of 7 - 10dB and is normalized to have peak values at +-1. The precursor audio signal may be given by: $x \left(n\right) = {\sum }_{k = 1}^{K} {A}_{k} cos \left(2{πkf}_{1} t+{ϕ}_{k}\right)$ where A is the amplitude of the k^{th} harmonic, f₁ is the fundamental frequency, and ϕₖ is the phase angle of the k^{th} harmonic.

In step s108, the precursor audio signal is compressed to provide a compressed audio signal with a lower crest factor than the precursor audio signal.

Compressing the audio signal includes applying a compression algorithm to the precursor audio signal to reduce the overall dynamic range of the precursor audio signal by narrowing the difference between the loudest and softest parts of the signal. The compression of the precursor audio signal may also be referred to herein as "clipping", "non-linear clipping", or "soft clipping" of the audio signal because of the way in which compression reduces the size of larger peaks in the audio signal relative to smaller peaks in the audio signal.

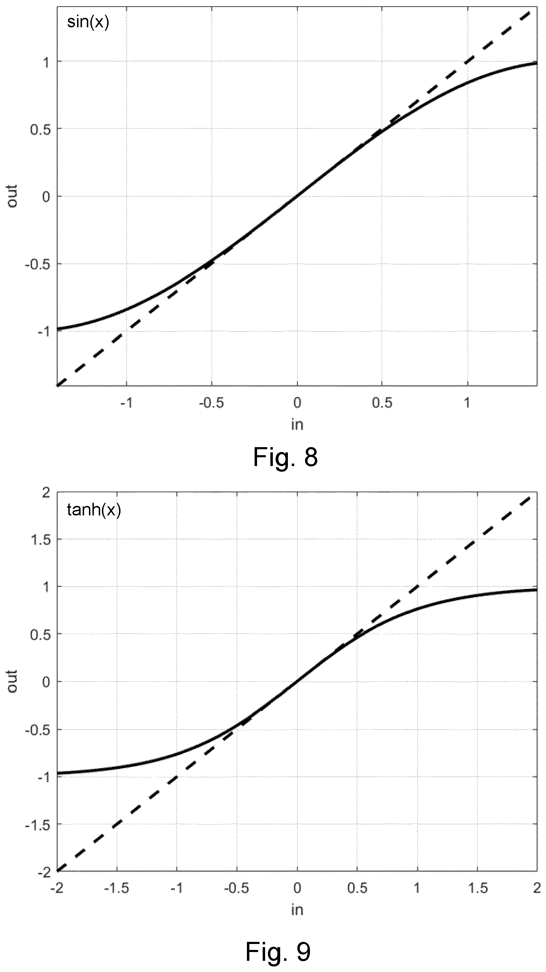

Many known audio compression algorithms/strategies may be used in step s108. Two example compression algorithms/strategies are described below in relation to Figs. 8 and 9.

In step s110, the crest factor of the compressed audio signal (which in this example is a digital signal at this stage) is calculated and compared to a predetermined threshold. If the crest factor is lower than the predetermined threshold, then the compressed audio signal may be stored as a final horn signal for use by a horn apparatus. In some examples, the final horn signal may not be stored but instead passed directly to a horn apparatus for playback as an audible warning sound.

If the crest factor is higher than the predetermined threshold, then step s108 may be repeated to further compress the compressed audio signal. Steps s108 and s110 are then repeated until the crest factor of the audio signal is lower than the predetermined threshold. In this way, the precursor audio signal may be compressed one or more times until it has a crest factor that is below the predetermined threshold.

The predetermined threshold for the crest factor of the digital signal may be 6 dB or lower, 5 dB or lower, preferably 3 dB or lower, or in some examples 1dB or lower. By reducing the crest factor to these levels the compressed audio signal may be played by a loudspeaker at an increased SPL that is suitable for a vehicle horn compared to the uncompressed signal without a corresponding increase perceived in distortion.

The method of Fig. 6 may be implemented in whole or in part by a computer. For example, the method may be performed on a separate computer and then the final horn signal may be stored as a digital signal for subsequent reproduction by a horn apparatus.

For example, when the method is implemented by a computer, the precursor audio signal may be digitally created based on harmonic additive synthesis. The of the precursor audio signal duration may be arbitrary but is preferably long enough to enable the finding of inaudible loop points , typically, corresponding to one period of the fundamental frequency.

In other examples, the method of Fig. 6 may be performed in part or in whole by dedicated signal processing hardware. In these examples the fundamental frequency and the weights of the harmonics may be preselected during deign of the circuit. In these examples, the method may be performed by circuitry which synthesizes the audio signal "on the fly", e.g. using analogue hardware to synthesize the audio signal on the fly. Note that in these examples, the precursor audio signal and/or the synthesized audio signal may be represented by analogue signals instead of the digital signals described above.

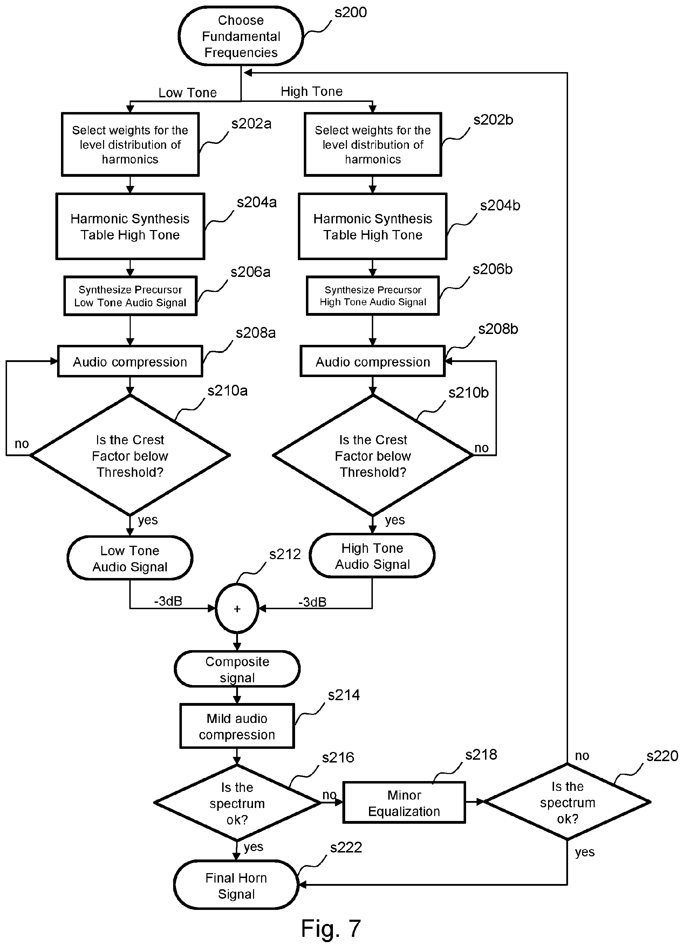

Fig. 7 is a flowchart representing a method of synthesizing a dual tone audio signal for use by a horn apparatus according to the invention.

In step s200 of Fig. 7, two fundamental frequencies are chosen for the production of a low tone precursor audio signal and a high tone precursor audio signal containing one of the fundamental frequencies and a plurality of harmonics.

Typically, the fundamental frequencies of the low tone precursor audio signal and the high tone precursor audio signal are spaced apart by a minor third. For example, the fundamental frequency of the low tone precursor audio signal may be f₁=420Hz and the fundamental frequency of the low high tone precursor audio signal may be f₁=505Hz.

In step s202a, weights are selected for each of the plurality of harmonics corresponding to the fundamental frequency of the low tone precursor signal. As in step s102 of Fig. 6, the weights may represent the amplitudes and phase angles of the plurality of harmonics corresponding to the fundamental and are chosen so that the precursor low tone audio signal represents a vehicle horn sound.

In step s204a, the selected weights and the harmonic frequencies are stored in a harmonic synthesis table for synthesizing the precursor low tone audio signal and in step s206a, the harmonic synthesis table is used to synthesize the precursor low tone audio signal as was described above for steps s104 and s106 for Fig. 6.

In step s208a, the precursor low tone audio signal is compressed to provide a compressed low tone audio signal with a lower crest factor than the precursor audio low tone signal.

In step s210a, the crest factor of the compressed low tone audio signal is calculated and compared to a predetermined threshold. If the crest factor is lower than the predetermined threshold, then the compressed low tone audio signal is stored for combining with a compressed high tone audio signal.

If the crest factor is higher than the predetermined threshold, then step s208a is repeated to further compress the compressed audio signal. Steps s208a and s210a are then repeated until the crest factor of the low tone audio signal is lower than the predetermined threshold.

As in the embodiment of Fig. 6 the predetermined threshold for the crest factor may be 6 dB or lower, 5 dB or lower, preferably 3 dB or lower, or in some examples 1 dB or lower.

In steps s202b to s210b the same process is applied to produce a compressed high tone audio signal which comprises the high tone fundamental frequency.

In step s212 the compressed low tone audio signal and the compressed high tone audio signal are combined (e.g. summed) to produce a composite audio signal containing both of the fundamental frequencies and the plurality of harmonics thereof. In some examples, the compressed low tone audio signal and the compressed high tone audio signal may be attenuated first (for example by -3dB), before they are combined to reduce the resulting amplitude of the composite signal and avoid clipping of the signal later. The composite signal may optionally normalised after combining to ensure the signal range is between +1 and -1.

Optionally, in step s214, additional audio compression may be applied to further reduce the crest factor of the composite audio signal. The presence of two different fundamental frequencies in the composite signal means that the additional audio compression can introduce distortion to the signal, e.g. in the form of additional frequencies created by the multiplication of the two different fundamental frequencies and their harmonics. Therefore, the additional audio compression is preferably mild to reduce the amount of additional distortion. However, a small amount of distortion would not necessarily be noticeable to the listener and therefore the additional application of mild audio compression may be useful to ensure that the crest factor of the composite audio signal is below the desired level.

Optionally, at step s216 the composite audio signal is analysed to assess if it is acceptable for the intended application. For example, the audio signal may be played to see if it sounds distorted to the human ear. The crest factor may also be calculated to check that it is below a predetermined threshold for the composite audio signal.

The compression stages may alter the spectrum somewhat which means that the summation of the individual frequency components may not always lead to the desired 1/3 octave band spectrum levels. Therefore, step s216 may comprise calculating the 1/3 octave band levels to see if they meet any one or more of the requirements discussed herein (e.g. are sufficiently large enough for use by a vehicle horn apparatus, e.g. by checking to see whether no more than three of the 1/3 octave band levels for the composite audio signal in the frequency range 400Hz to 10kHz, deviate from the average level across the 1/3 octave bands in the frequency range 400Hz to 10kHz by more than +-15dB).

If the composite audio signal is not acceptable for the intended application then minor narrow band equalization may be applied to the signal in step s218. This may be carried out with an FIR filter which is configured to adjust the magnitude of the signal without affecting the relative phase relationships of the signal.

In step s220 the composite audio signal is assessed again to see if it is suitable for the intended application. If the signal I still not suitable then the method may be repeated with different weights being applied to the plurality of harmonics until a suitable audio signal is synthesized.

In steps s218 and s220, if the composite signal is suitable for the intended application then it is stored as a final horn signal (in this case as a digital signal) for subsequent reproduction by a horn apparatus.

The present inventors have found that synthesizing a composite audio signal with a crest factor between 1.5 - 3dB is preferable for use by a vehicle horn apparatus. The present inventors have also found that optimizing the signal further for even smaller values of crest factor is, in most cases, not useful. This is because in use the synthesized audio signal is typically converted from a digital signal to an analogue signal, amplified by a limited bandwidth amplifier, and sent through a wire towards a loudspeaker which causes signal phase shifts to occur leading to a real-life crest-factor at the speaker terminals of approximately 4-5dB.

For example, the composite audio signal shown in Fig. 3, which at this stage is a digital signal, has a crest-factor of 2.4dB. If the voltage at the loudspeaker speaker terminals is measured to be 12V peak and 6.8Vrms, the "real-life" crest-factor of the signal, i.e. the crest factor of the composite audio signal as supplied to the terminals of the loudspeaker (as an analogue electrical signal) would be closer to 5dB. This is lower than a typical 6dB crest-factor pink noise test signal of loudspeakers and so is a demanding signal for loudspeaker reproduction. Therefore, further optimization to decrease the crest-factor may result in a signal which exceeds the power handling capacity of the loudspeaker.

In some examples, (not shown) a dual tone car horn may comprise two individual loudspeakers. In these examples, the low tone audio signal of Fig. 7 may be combined with the high tone audio signal of Fig. 7 to provide the composite audio signal by a first loudspeaker producing sound based on the low tone audio signal and a second loudspeaker producing sound based on the high tone audio signal. In this example, sound reproduced by the first and second loudspeakers is combined outside of the first and second loudspeakers to provide the composite audio signal as a sound.

This example may be viewed as performing the method of Fig. 6 twice, using two different fundamental frequencies to produce two different horn signals. For the avoidance of any doubt, the optional steps s214 to s220 of Fig. 7, comprising performing additional mild compression, minor equalization, and additional checks to see if the signal is okay, would not be performed in this example when the low and high tone horn signals are combined using two loudspeakers.

This approach is particularly useful for signal reproduction using heavily distorting loudspeakers. For example, if the loudspeakers (e.g. of a vehicle horn apparatus) create harmonic distortion and the input signal to the loudspeakers only contain frequencies with a single harmonic relationship, the loudspeakers cannot create new frequencies but only alter the spectral power relationship of the harmonics. Therefore, combining the low tone and high tone audio signals using loudspeakers can result in an audible warning sound which has less distortion than if the low tone and high tone audio signals were combined prior to playback by a loudspeaker. This allows the use of a highly non-linear loudspeaker motor system and a heavily limiting loudspeaker suspension thus facilitating the use of a low cost and more efficient loudspeaker design.

Fig. 8 represents a sine function which is suitable for use in audio compression according to one or more aspects of the present disclosure where the dashed line represents an input signal before compression and the sold line represents a signal after compression using the sine function.

Of course, alternative compression techniques exist and may be used in place of the functions described in Figs. 7 and 8.

As shown in Fig. 8 when the input signal is multiplied by factor √2, sin(x) maps the output back to the -1 to 1 digital range and so leads to a 1.41:1 compression ratio. As sin(x)=x for small values only the peaks of the signal are compressed. This is useful for maintaining the character of the sound after compression.

Fig. 9 represents a tanh function suitable for use in audio compression according to one or more aspects of the present disclosure. With this compression function, similar but more aggressive compression is achieved that by the sine compression algorithm of Fig. 8. As shown in Fig. 9 multiplying the input signal by 2 and applying tanh(x), the output signal is again mapped back to the -1 to 1 digital range. The present inventors are found that generally performing two stages of tanh(x) compression lead to a signal with a crest-factor which is low enough for use by a horn apparatus for a vehicle (such as an automobile).

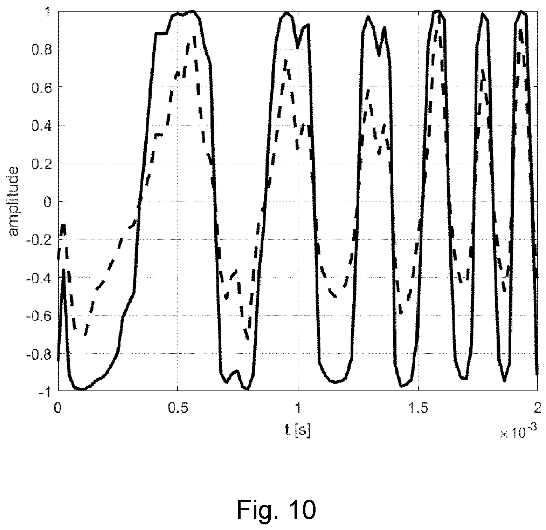

Fig. 10 shows a time series audio signal before and after audio compression using the tanh function of Fig. 9 where the dashed line corresponds to the input signal, the solid line represents the audio signal after two stages of audio compression using a tanh compression algorithm.

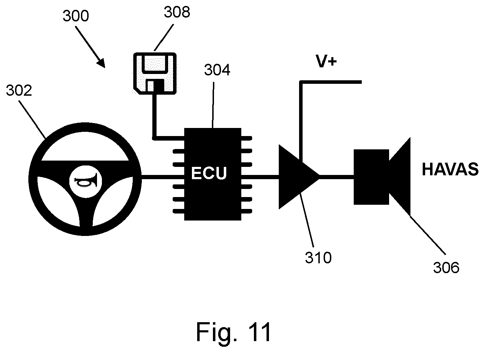

Fig. 11 shows a schematic of an example horn apparatus 300 for a vehicle including a horn activation mechanism 302, a processing unit 304, an amplifier 310, and a loudspeaker 306.

In this example, the horn activation mechanism 302 is located on a steering wheel of the vehicle (for example as a button). The horn activation mechanism 302 is operable by a user of the vehicle to activate the horn apparatus to cause the loudspeaker 306 produce an audible warning sound based on an audio signal provided by the processing unit 304, using the loudspeaker 306.

In this example, the processing unit 304 is an ECU (engine control unit) of the vehicle. In some examples, the processing unit 304 could be a dedicated computing unit for the horn apparatus.

The processing unit 304 is connected to a memory 308 for storing an audio signal for playback by the loudspeaker 306 for producing the audible warning sound. Importantly, the audio signal at the input of the loudspeaker 306 is configured to have a crest factor that is below a predetermined threshold of 6dB or lower.

In this example, the loudspeaker 306 is an electrodynamic loudspeaker configured to produce sound which radiates outwardly from a vehicle. Preferably, the loudspeaker 306 is also configured to produce low frequency sound between at least 150 - 300Hz as part of an AVAS system. Example loudspeaker assemblies are described herein with reference to Figs. 12 to 23 below.

Fig. 12 shows a car 320 comprising the horn apparatus 300 of Fig. 11 wherein the loudspeaker 306 of the horn apparatus is mounted to the underbody of the car.

In this example, the loudspeaker 306 is mounted facing downwards and is configured to radiate sounds through a circular cut-out provided in the underbody of the car. In this position, sound provided by the loudspeaker assembly is primarily radiated outwardly from the vehicle. This arrangement is advantageous as it decreases the amount of sound produced by the loudspeaker 306 that is heard inside of the car.

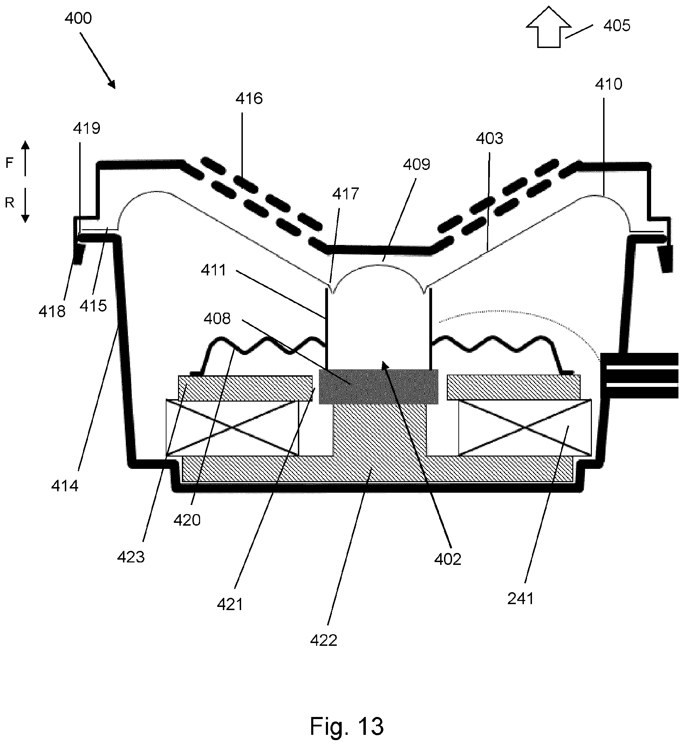

Fig. 13 shows a cross-section view of an example loudspeaker 400 which may form part of a Horn plus Acoustic Vehicle Alerting System (HAVAS). The loudspeaker assembly 400 includes a drive unit 402, a frame, and a diaphragm 403.

The diaphragm 403, which has a front face that faces in a forward direction parallel to a movement axis 405 and a rear face that faces in a rearward direction parallel to the movement axis 405, is suspended from the frame by a suspension.

The drive unit 402 is configured to move the diaphragm 403 along the movement axis 405 based on an electrical signal.

In this example, the drive unit 402 is an electromechanical drive unit 402 that includes a magnet unit 422, which is configured to produce a magnetic field in an air gap 421, and a voice coil 408 which is attached to a voice coil former 411. The voice coil 408 is configured to sit in the air gap 421 when the diaphragm 403 is at rest. When the loudspeaker is in use, the voice coil 408 is energized (e.g. by having the electrical signal pass through it) to produce a magnetic field which interacts with the magnetic field produced by the magnet unit 422. This causes the voice coil 408 to move relative to the magnet unit 422 along the movement axis 405 with force F=B*L*i such that the diaphragm 403 radiates sound in both forward F and rear R directions parallel to the movement axis 405.

The suspension includes a surround 410 (which may also be referred to as a "roll suspension" or "roll edge") located at a perimeter of the diaphragm 403. The diaphragm 403 and the surround 410 are formed of a single piece of material.

In this example, the suspension also includes a damper 420 (which may also be referred to as a "spider") which connects the voice coil former 411 to the magnet unit 422. The majority of the restorative force provided by the suspension is provided by the surround 410. However the damper 420 is useful for simplifying the manufacturing process and increasing the reliability of the loudspeaker.

The surround 410 may suitably comprise a corrugation which extends around the perimeter of the diaphragm 403; the centre of that surround 410 corrugation having a longest dimension D_d in a direction perpendicular to the movement axis 405 measured between points at the peak of the corrugation in the forwards direction (that is, the most forward point), the ratio of D_d to D_clamp being 0.8 or more. The corrugation may be convex (that is, with respect to the forward direction, the edges of the corrugation are not as far forwards as the middle of the corrugation) or concave (that is, with respect to the forward direction, the edges of the corrugation are further forward than the middle of the corrugation). Preferably the corrugation is convex with respect to the forward direction. The corrugation may preferably have a curved cross section (in a section parallel to the movement axis 405), in particular a curve that is a section of a circle, and be tangentially connected to the radially adjacent feature, for example here the diaphragm 403. That is, the connection of the corrugation to the diaphragm 403 is at a point where the wall of the diaphragm 403 (such as the side wall of the cone shaped portion discussed above) is in a direction tangential to the theoretical circle of which the curved corrugation is a section. This affords a smooth transition between the corrugation and the diaphragm 403.

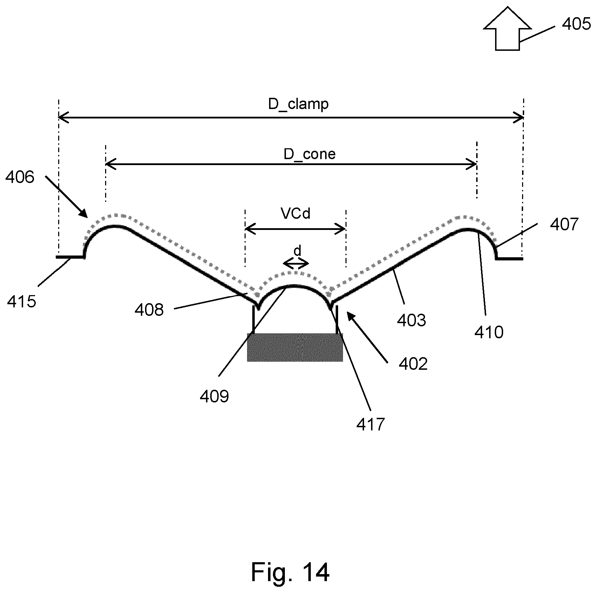

The distances corresponding to D_clamp, D_d, D_cone and D_VC in one embodiment are illustrated schematically in Figure 14.

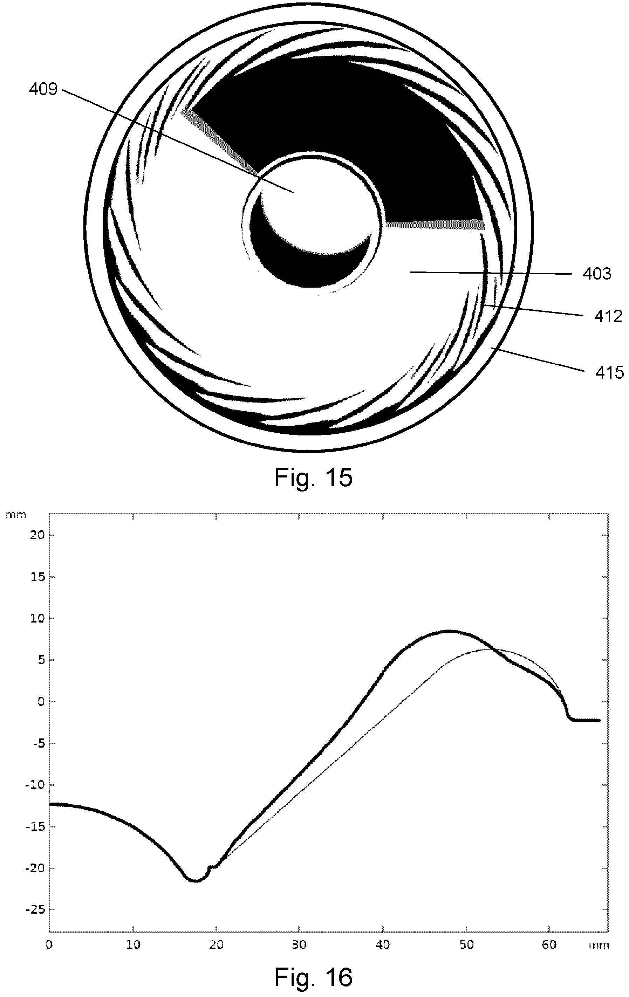

In some examples, the diaphragm 403 may include tangentially extending pleats at the perimeter of the diaphragm 403. This is described below in reference to Fig. 15.

A dust cap 409 is provided in front of the drive unit 402 to prevent dust or other foreign particles from getting into the drive unit 402. In this example, the dustcap 409 and is integral with the diaphragm 403 such that the surround 407, the diaphragm 403 and the dustcap 409 form a homogenous membrane.

At the point where the voice coil former 411 meets the diaphragm 403, there is an annular notch/ledge 417 in the shape of the diaphragm 403. This lies between the diaphragm 403 and the dustcap 409. This permits easier placement and location of the voice coil 408 during manufacturing.

The loudspeaker assembly 400 includes a lid comprising a grille 416 for protecting the loudspeaker, for example, from moisture ingress to permit outside usage. In this example, the grille 416 follows the shape of the diaphragm 403 and is therefore in the shape of a truncated cone (frustoconical). **It** has a flat portion corresponding to the location of the dustcap 409 and an angled portion corresponding to the location of the diaphragm 403. In this example, there is no 'line of sight' through the grille 416 from outside to the diaphragm 403. By presenting such a 'tortuous path' for water droplets etc. the grille 416 provides effective protection from water or debris.

In this example, the attachment of the diaphragm 403 to the frame 414 is provided by a first mechanical clamp formed by a ledge 419 or platform piece of the frame 414 and a corresponding lip of the lid 418.

To ensure the connection between the diaphragm 403 and frame 414 is flexible whilst being securely connected to the frame, the surround 407 links the diaphragm 403 to the first mechanical clamp via a mounting portion 415 of the homogenous membrane. The mounting portion 415, which is an annular flange at the perimeter of the surround 407. In this example, the mounting portion 415, the surround 407 and the diaphragm 403 are all formed from a single piece of material.

Fig. 14 is a section of the loudspeaker assembly of Fig.13 showing the homogenous membrane comprising the surround, the diagram and the dust cap attached to the voice coil former of the drive unit.

Fig. 14 shows the piston-like movement of the cone shaped diaphragm between a relaxed state (solid line) and an actuated state (dotted line) along the movement axis.

As mentioned above, the diaphragm and the surround are made from a single piece of material. The material preferably has a certain thickness and Young's modulus, while the diaphragm has a certain size, to give a desired motion and hence acoustic response characteristics. For example, the material may be a glass fibre/epoxy resin composite material with a thickness of 0.2 mm.

Fig. 15 shows a plan view of another example diaphragm 403 with an integral dustcap 409 and surround 412. In this example, the surround comprises tangentially extending pleats at the perimeter of the diaphragm 403. The tangentially pleats are useful for facilitating the excursion capability of the diaphragm 403 whilst preventing collapse of the surround 412 when the cone is moving towards the drive unit.

In this example, and also in the example of Fig. 13, the diaphragm 403 has a dished shape, i.e. the diaphragm 403 includes a cone-shaped portion which is substantially in the shape of an open cone and has a cone opening angle in the range 60° to 160°. As an open cone, this means that what would be the 'tip' of the cone is missing. Preferably, the cone opening angle (measured as the angle between the side walls of the cone-shaped portion) is in the range 90° to 130°.

The Young's modulus of the material of the diaphragm 403 and the surround may be in the range 2 to 15 GPa, preferably in the range 2 to 8 GPa and more preferably in the range 2 to 6 GPa.

The diaphragm 403 is formed from a polymer, e.g. by vacuum-forming or by injection moulding. However, other suitable materials are described above in this disclosure. Alternatively, the diaphragm 403 may be made from a non-woven composite such as paper, including coating, dipping and other known processes to waterproof the material.

In a traditional loudspeaker, comprising a cone and a surround made from different materials, the surround Young's modulus is often chosen to have a much smaller value (e.g. 1/1000^{th}) than the Youngs Modulus of the cone material. For example, the cone material of a traditional loudspeaker may be made from a material with a Young's modulus of 5GPa whereas the surround may be made from a rubber with 5MPa. Therefore, the diaphragm 403 of a traditional loudspeaker has a boundary condition at the periphery of the diaphragm 403 which can be considered "free" but loaded with the mass of the surround.

A first radial eigenfrequency occurs in diaphragms having a "free" boundary condition when 1/4^{th} of the wavelength (of a signal which causes the diaphragm to vibrate) corresponds to the radial dimension of the cone (between the inner periphery of the diaphragm and the start of the surround). This leads to "bird-wing" resonance where the periphery of the diaphragm 403 moves considerably more axially than the apex of the cone portion which is close to the driving voice coil.

For example, if the speed of sound, c, in the diaphragm is 180m/s and the radial dimension of the diaphragm is 30mm, then the first radial eigenfrequency may occur at a frequency having a wavelength, λ = 4x30mm. Thus, the first eigenfrequency (given by f = c/λ) would occur at 1.5kHz. This is the case for a truly free boundary (i.e. the eigenfrequency of a cantilever). However, the mass of the surround in a traditional loudspeaker typically leads to a lower first eigenfrequency of 600-800Hz.

In contrast, the diaphragm 403 of Fig. 15 has a constant thickness and a constant Young's modulus owing to the surround and the diaphragm 403 being formed from a single piece of material. Therefore, there is no discontinuity in the diaphragm 403 and the periphery of the diaphragm 403 is fixed (i.e. the diaphragm has a fixed boundary condition). This leads to the first radial eigenfrequency being at a higher frequency than for traditional loudspeakers, corresponding to a half wavelength between the apex of the cone and the fixed periphery of the diaphragm 403.

For example, if the speed of sound, c, in the diaphragm is 180m/s and the radial dimension of the diaphragm and the surround is 45mm, then the first radial eigenfrequency may occur at a frequency having a wavelength, λ = 2x45mm. Thus, the first eigenfrequency f = c/λ is 2kHz.

Preferably, the geometry, Young's Modulus, Poisson's Ratio, and specific mass of the diaphragm 403 are chosen such that the first radial eigenfrequency of the diaphragm 403 is in the range of 2kHz to 6kHz which is desirable for optimized performance as a vehicle horn.

Fig. 16 shows an eigenfrequency simulation for the diaphragm of Fig. 15 wherein the apex of the cone - corresponding to the driving point - and the outer periphery of the diaphragm are fixed. The thin line represents the cone-shaped geometry of the diaphragm when the diaphragm is at rest and the thick line represents the relative displacement (i.e. the modal behaviour) of the diaphragm when the voice coil is configured to displace the diaphragm by +-0.1mm a frequency near to the eigenfrequency of the diaphragm. For example, at the frequency shown, the portion of the cone at radius 40-50mm moves by +-0.2mm even though the voice coil only moves by +-0.1mm. This greater displacement of the diaphragm at the eigenfrequency leads to a greater output and therefore greater efficiency when the loudspeaker is being driven at such frequencies.

For a cone with a Young's modulus of 2.2GPa, a Poisson's Ratio of 0.4, a density of 1.4g/cm3 and a thickness of 0.2mm, the first radial eigenfrequency was calculated as 2.55kHz. Preferably, the diaphragm is designed to exhibit modal behaviour (and the associated increased displacement) in the 1/3 octave bands of 2kHz, 2.5kHz or 3.15kHz for increased efficiency as a vehicle horn apparatus.

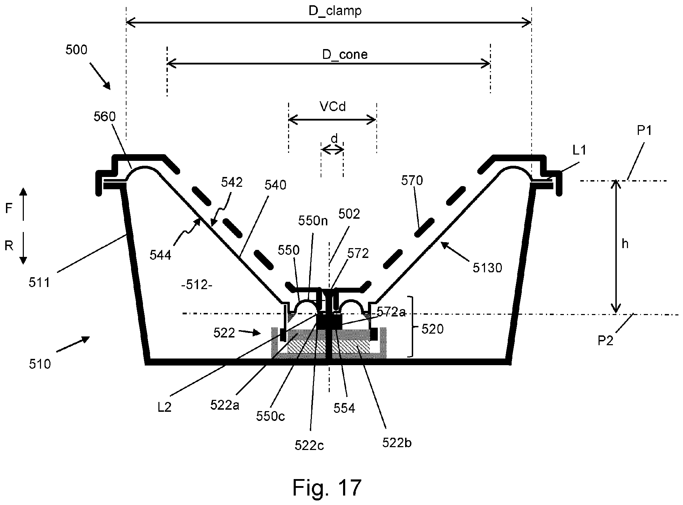

Fig. 17 shows another example loudspeaker assembly 500. The loudspeaker assembly 500 is similar to the loudspeaker assembly 400 of Fig. 13 except that the diaphragm includes a second, inner suspension.

The loudspeaker assembly 500 includes a frame 510, which is substantially rigid and encloses a volume 512, a drive unit 520, and a diaphragm 530.

The diaphragm includes a body portion 540 which extends between the inner suspension 550 and an outer suspension portion 560. As in Fig. 13, the body portion 540 has a generally conical shape with a concave face of the cone portion facing in the forward direction F, and is referred to as cone portion 540 below.

The outer suspension portion 560 is integral with the cone portion 540, and is attached to the frame 510 at an attachment surface 562 on the outer suspension portion 560 and at a first landing surface in the frame 510.

The attachment surface 562 on the outer suspension portion 560 includes a first attachment location P1 having a first position along the movement axis. The first attachment location P1 could be any location at which the outer suspension portion 560 attaches to the frame 510.

In this example, the inner suspension portion 550 is integral with the cone portion 540, and is attached to the frame 560 at an attachment surface 552 on the inner suspension portion 550 and at a second landing surface 563 on the frame 560 such that the cone portion 540 is suspended from the frame 560 via the inner suspension portion 550.

In this example, the second landing surface 563 is on a spacer portion 572a which is included in (e.g. by being attached to or an integral part of) a pin 572. The pin 572 is attached to the magnet unit 522 and housing 566 as described in more detail below, and therefore the pin 572 and spacer portion 572a can be viewed as part of the frame 560.

The attachment surface 552 on the inner suspension portion 500 includes a second location L2 having a second position along the movement axis. The second attachment location L2 could be any location at which the inner suspension portion 550 attaches to the frame 560.

The attachment surface 552 on the inner suspension portion 500 includes a second location L2 having a second position along the movement axis. The second attachment location L2 could be any location at which the inner suspension portion 550 attaches to the frame 560.

In this example, the second attachment location is a location L2 within the attachment surface 552 on the inner suspension portion 550 at which there is a boundary between a clamped region 550c of the inner suspension portion (whose movement is clamped by attachment to the frame 560 as the cone portion 540 is moved along the movement axis 502 by the drive unit 520) and a non-clamped region 550n of the inner suspension portion 550 (which is not attached to the frame 560 and thus is able to move as the cone portion is moved along the movement axis by the drive unit).

In this example, the cone portion 540 extends between a first plane P1 which is perpendicular to the movement axis 502 and which passes through the first attachment location L1, and a second plane P2 which is perpendicular to the movement axis 502 and which passes through the second attachment location L2.

Advantageously, the first position along the movement axis is separated from the second position along the movement axis by a distance h. This distance h corresponds to the distance between the first plane P1 and the second plane P2.

This separation h between the first attachment location L1 and the second attachment location L2 along the movement axis helps to inhibit rocking motion of the cone portion 540 when the loudspeaker assembly 500 is in use, without the need for a damper.

In this example h is 20mm.

In this example, the longest dimension of a non-clamped region of the outer suspension portion 550 in a direction perpendicular to the movement axis, D_clamp is 115mm, and the voice coil has an innermost diameter of VCd =38.55mm, such that D_clamp ≥ 2VCd.

A centre fixation diameter d=10mm, which is less than VCd, this is the longest dimension of a clamped region of the inner suspension portion in a direction perpendicular to the movement axis, and thus extends between two points on a boundary between a region of the clamped region of the inner suspension portion and a non-clamped region of the inner suspension portion. Outside of the diameter d, the inner suspension portion is able to move

In this example, the diaphragm 530 is made of a single piece of material, which is Glasfiber + Epoxy having a uniform thickness t=0.15mm. This material happens to be non-transparent, but other materials (transparent and non-transparent) are possible.

A number of different materials which may be used for the diaphragm have already been listed above, and several possible materials are listed earlier in this disclosure.

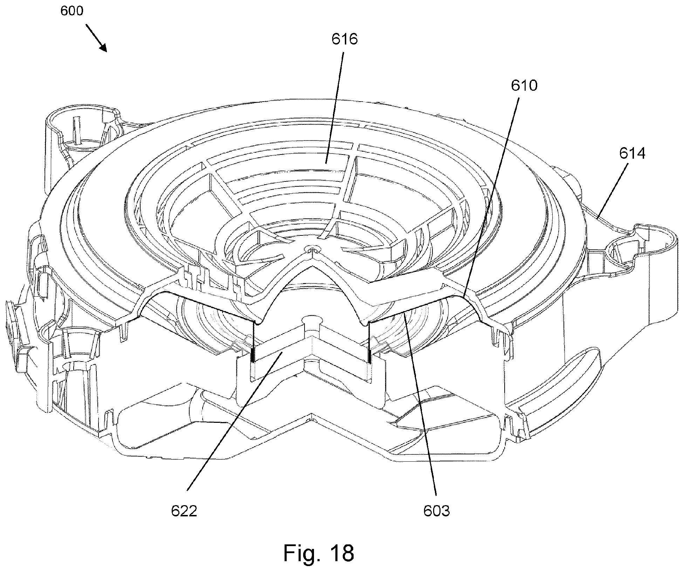

Fig. 18 shows a perspective cut-away view of another example loudspeaker assembly 600 which comprises a frame with a grille 616, and surround 610 which is integral with the diaphragm 603. The loudspeaker assembly 600 may optionally include a second suspension.

In this example, the diaphragm 603 and the surround 610 are made from 0.19mm thick biaxially oriented Polyethylene terephthalate with an outer diameter of 120mm. A first radial break-up frequency is 2.8kHz.

The loudspeaker is driven by a 38mm voice coil with 2 ohms nominal impedance, suspended in an airgap formed by a washer and a U-yoke Neodymium magnet unit. The magnetic flux generated by the Neodymium magnet unit is BHmax of 390kJ/m3.

The rear face of the diaphragm 603 is configured to radiate into a rear enclosure which has a volume of to 0.3 litres. Preferably the rear enclosure is acoustically sealed to provide an air cushion in the enclosure which acts as an additional suspension for the diaphragm 603.

The front face of the diagram is configured to radiate into a cavity formed between the diaphragm 603 and a grille 616 which is configured to protect the diaphragm 603 from water (e.g. from a pressure washer or road splash when the loudspeaker assembly 600 is mounted to a vehicle). In this example, the distance between the diaphragm 603 and the grille 616 is 3.5mm.

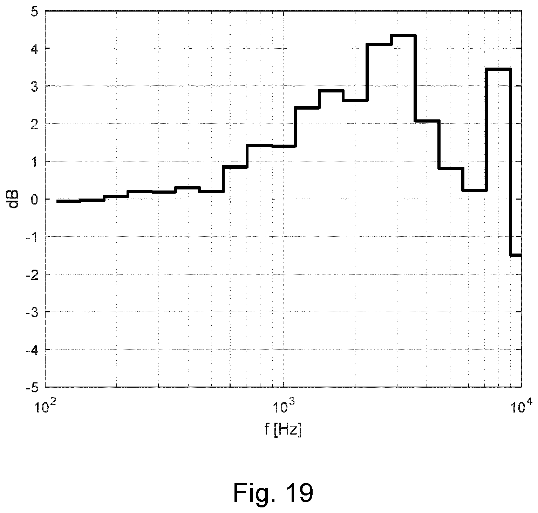

The openings in the grille 616 are chosen such that both the 2kHz and the 2.5kHz 1/3 octave band exceed +3dB gain compared to if there was no loudspeaker grille 616. This effect is described in more detail below with reference to Fig. 19.

Fig. 19 shows the relative sensitivity gain (averaged across 1/3 octave frequency bands) of the loudspeaker assembly of Fig. 18 with a grille 616 compared to a loudspeaker assembly without a grille.

In this example, the acoustic air volume provided between the diaphragm 603 and the grille 616 performs a function of increasing the loudspeaker's sensitivity in certain frequency bands. The present inventors have found that this effect is most apparent when the grille has a shape which corresponds to the shape of the diaphragm and a distance between the cone portion of the diaphragm and the grille that is between 1-10mm. The openings of the grille may also be configured such that a desired increase in the loudspeaker sensitivity is reached in the desired octave bands. This is described in more detail in WO2022189546A1.

In Fig. 19, positive values indicate a gain and therefore an increase in loudspeaker sensitivity. Preferably the openings in the loudspeaker grill are configured to provide a gain of at least +3dB for at least one of the 1/3 octave bands including the 2kHz, 2.5kHz or 3.15kHz frequency bands.

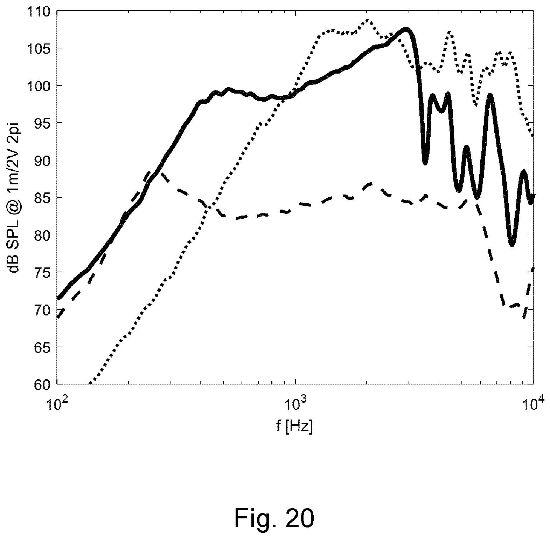

Fig. 20 shows a frequency response for a loudspeaker assembly according to Fig. 18 in comparison to conventional loudspeaker assemblies. The thick black line represents the frequency response for the loudspeaker assembly of Fig. 18 which may form part of a HAVAS system for a vehicle (this loudspeaker may be referred to herein as a "HAVAS loudspeaker"). The dashed line represents the frequency response for a traditional AVAS loudspeaker which has a similar enclosure volume and the same input voltage as the HAVAS loudspeaker assembly of Fig. 18. The dotted line shows the frequency response of a traditional compression driver loudspeaker from a vehicle horn.

Although the HAVAS loudspeaker shows 12dB/oct roll-off below 400Hz, the low frequency range between 100Hz and 250Hz is on par with the traditional AVAS loudspeaker. Above 250Hz the sensitivity of the HAVAS loudspeaker substantially exceeds that of a traditional AVAS loudspeaker and so allows for its use as a car horn.

The sensitivity of the traditional compression driver exceeds the sensitivity of the HAVAS loudspeaker between 1kHz and 2.5kHz. However, the HAVAS loudspeaker exhibits, on average, very comparable sensitivity in the 2kHz, 2.5kHz and 3.15kHz bands. Accordingly, the HAVAS loudspeaker assembly of Fig. 18 is suitable for use as an electronic horn.

Fig. 20 also shows that the traditional compression driver is unsuitable for low frequency reproduction and below 400Hz is worse than the traditional AVAS loudspeaker. Any sound output below 1kHz is heavily distorted due to the lack of excursion capability of the rigid suspension of the phenolic diaphragm which is typical of the compression driver loudspeakers used in vehicle horns.

When the HAVAS loudspeaker (e.g. as described in Fig. 18) is connected via a wire (of 2x0.5mm2) to an amplifier delivering +-12V peak-peak input signal and is configured to playback a suitable audio signal mimicking a dual tone vehicle horn as described, the resulting audio system can be homologated according to ECE-28 Part 1 as electronic horn.

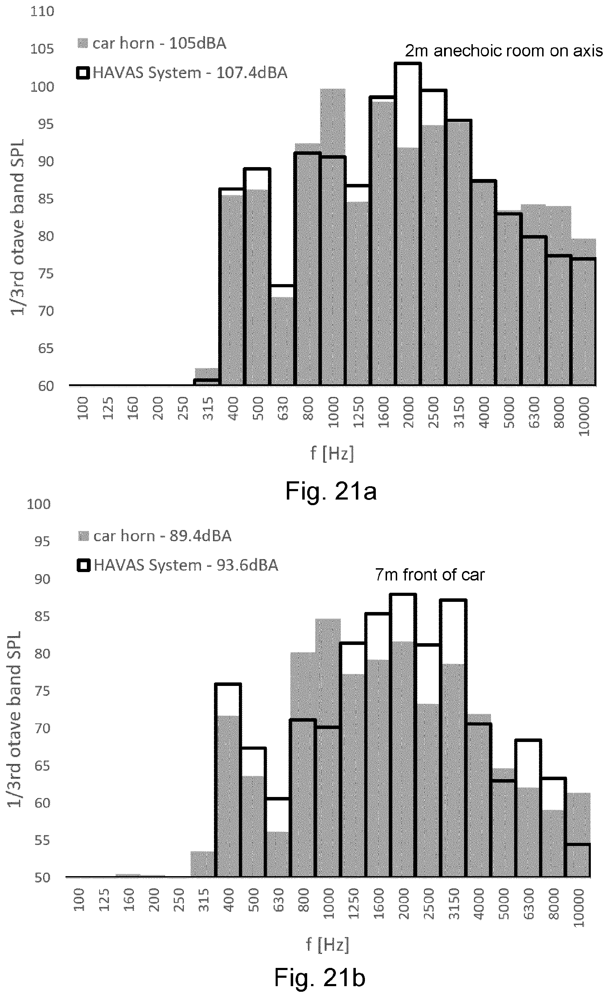

Fig. 21a shows a spectrum of SPL for each 1/3 octave frequency band measured 2m away under anechoic conditions for the HAVAS loudspeaker compared to a traditional electromechanical dual tone car horn. The empty bars with black outlines represent the spectrum for a HAVAS loudspeaker according to the present disclosure (e.g. as described for Fig. 18). The grey bars represent the spectrum of the traditional electromechanical dual tone car horn at +12V under the same conditions.

Fig. 21a shows that both loudspeakers meet or exceed the 105dBA requirement of ECE-28 for car horns.

Fig. 21b shows a spectrum of SPL for each 1/3 octave frequency band for a traditional dual tone car horn mounted under the hood in comparison to a HAVAS loudspeaker according to the present disclosure (e.g. as described for Fig.18). The SPL for each 1/3 octave band was measured at a distance of 7m from the loudspeaker assembly as described in ECE-28 part 2 mentioned previously in this disclosure.

The HAVAS loudspeaker assembly is mounted facing down to the underbody of a vehicle (e.g. as shown in Fig. 12) and is configured to radiate sound through a circular cutout in the underbody of the vehicle which corresponds to the dimensions of the grille. In this position, sound being produced by the loudspeaker assembly is primarily radiated towards the outside of the vehicle. Since the HAVAS loudspeaker is intended to be used for producing pedestrian warning sounds at low speeds, this method of integrating the loudspeaker assembly in a vehicle in is preferred as it decreases the artificial AVAS warning sound that can be heard inside of the vehicle cabin.

Fig. 21 b shows that both the traditional dual tone car horn and the HAVAS solution meet or exceed the 87dBA requirement of ECE 28 Part 2.

Fig. 22 shows a perspective view of another example loudspeaker assembly 700 according to the present disclosure wherein the loudspeaker assembly includes a passive radiator 701.

The loudspeaker assembly of Fig.22 comprises an active loudspeaker 702 in a 2 litre enclosure 703 with a passive radiator 701. In this example, the active loudspeaker 702 is alike to the loudspeaker of Fig.18 but has a larger diameter (132mm instead of 120mm) and a different drive unit. The passive radiator 701 has a similar construction to the active loudspeaker 702, but without a voice coil or a magnet assembly. Passive radiators are known. By using the sound pressure trapped in the enclosure 703 the passive radiator 702 is configured to excite a resonance that makes it easier for the loudspeaker assembly 700 to produce the deepest pitches.

Therefore, by increasing the size of the enclosure and providing a passive radiator, the loudspeaker output at low frequencies can be increased compared to the previously discussed loudspeaker assembly of Fig. 18 which included a 0.3 litre enclosure without a passive radiator .

Fig. 23 shows frequency responses for the loudspeaker assembly 700 of Fig. 22 (solid black line) compared to the loudspeaker assembly of Fig. 18 (dotted line). Fig. 23 shows that the output of the loudspeaker assembly 700 including a passive radiator is larger at lower frequencies, e.g. Fig. 23 shows a +17dB increase at 150Hz.

Therefore, by including the passive radiator and using a larger enclosure volume, the loudspeaker assembly is more capable of producing low frequencies at clearly audible levels. This is particularly useful for car manufacturers that have a desire to use AVAS signals with louder low frequency content than the legal requirement, e.g. for emotionalization of the driving experience such as by mimicking the roaring sound of a combustion engine of a sports car.
***

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

The exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 60%.

### References

A number of publications are cited above in order to more fully describe and disclose the invention and the state of the art to which the invention pertains. Full citations for these references are provided below.
Regulation No 28 of the Economic Commission for Europe of the United Nations (UN/ECE) - "Uniform provisions concerning the approval of audible warning devices and of motor vehicles with regard to their audible signals." (ECE-28)
*"*Synthesis of low-peak factor signals and binary sequences with low autocorrelation" (Schroeder M R, 1970, IEEE Trans. Inf. Theory vol. 16 pages 85-89)
US10406976 B2
FR2983025
US2020/070719
WO2022253702A1
WO2022253924A1
WO2022189546A1
https://www.klippel.de/fileadmin/klippel/Files/Know_How/Application_Notes/AN_32_Effective_Ra diation_Area.pdf

## Claims

1. A horn apparatus (300) for a vehicle (320), the horn apparatus (300) including:
a horn activation mechanism (302) operable by a user of the vehicle (320);
a loudspeaker (306, 400, 500, 600, 702) for producing sound which radiates outwardly from the vehicle (320), wherein the loudspeaker (306, 400, 500, 600, 702) includes a drive unit (402, 520) and a diaphragm (403, 530, 603), wherein the drive unit (402, 520) is configured to move the diaphragm (403, 530, 603) along a movement axis (405, 502), wherein the diaphragm (403, 530, 603) has a front face that faces in a forwards direction parallel to the movement axis (405, 502) and a rear face that faces in a rearwards direction parallel to the movement axis (405, 502);
wherein the loudspeaker (306, 400, 500, 600, 702) includes a frame (414, 510) from which the diaphragm (403, 530, 603) is suspended by at least one suspension;
wherein the at least one suspension includes a surround (407, 410, 412, 560, 610) which is located at a perimeter of the diaphragm (403, 530, 603); and
wherein the diaphragm (403, 530, 603) and surround (407, 410, 412, 560, 610) are formed of a single piece of material;
wherein the loudspeaker (306, 400, 500, 600, 702) is configured to produce an audible warning sound based on an audio signal that has a crest factor that is below a predetermined threshold of 6dB or lower, in response to the horn activation mechanism (302) being operated by a user of the vehicle (320).

2. The horn apparatus (300) of claim 1 wherein the audio signal is configured to mimic a single tone or multitone vehicle horn sound.

3. The horn apparatus (300) of any preceding claim wherein the audio signal includes two fundamental frequencies and harmonics thereof, wherein the two fundamental frequencies are separated by no more than half an octave.

4. The horn apparatus (300) of any preceding claim wherein the audio signal has a crest factor of 3dB or lower when stored in digital form.

5. The horn apparatus (300) of any preceding claim wherein the horn apparatus (300) is configured such that the crest factor of the audio signal, when measured at the terminals of the loudspeaker (306, 400, 500, 600, 702) is 6dB or lower.

6. The horn apparatus (300) of any preceding claim wherein no more than three of the 1/3 octave band levels for the audio signal in the frequency range 400Hz to 10kHz deviate from the average level across the 1/3 octave bands in the frequency range 400Hz to 10kHz by more than +-15dB.

7. The horn apparatus (300) of any preceding claim wherein the horn apparatus (300) is configured to perform as an Acoustic Vehicle Alerting System (AVAS).

8. The horn apparatus (300) of any preceding claim wherein the longest dimension of the surround (407, 410, 412, 560, 610) and the diaphragm (403, 530, 603) in a direction perpendicular to the movement axis (405, 502) is 200mm or lower.

9. The horn apparatus (300) of any preceding claim wherein the horn apparatus (300) is configured to provide the audio signal to the loudspeaker (306, 400, 500, 600, 702) as a voltage waveform having a peak voltage of no more than 20V.

10. The horn apparatus (300) of any preceding claim wherein the single piece of material comprises a single-layer woven fabric of orthogonal woven fibres and a thermoset resin.

11. The horn apparatus (300) of any preceding claim wherein the single piece of material comprises a polymer.

12. The horn apparatus (300) of any preceding claim wherein the diaphragm (403, 530, 603) includes tangentially extending pleats at the perimeter of the diaphragm (403, 530, 603).

13. The horn apparatus (300) of any preceding claim wherein the single piece of material has a specific mass in the range 50g/m² to 500g/m².

14. The horn apparatus (300) of any preceding claim wherein the single piece of material has a thickness in the range 0.03 to 0.6 mm.

15. The horn apparatus (300) of any preceding claim wherein the Young's modulus of the single piece of material is in the range 2 to 15 GPa.

16. The horn apparatus (300) of any preceding claim further comprising an inner suspension portion (550) wherein the diaphragm (403, 530, 603) extends between the inner suspension portion (550) and the surround (407, 410, 412, 560, 610), and the inner suspension portion (550) is integral with the diaphragm (403, 530, 603).

## Patentansprüche

1. Hupenvorrichtung (300) für ein Fahrzeug (320), wobei die Hupenvorrichtung (300) Folgendes umfasst:
einen Hupenaktivierungsmechanismus (302), der durch einen Benutzer des Fahrzeugs (320) betätigbar ist;
einen Lautsprecher (306, 400, 500, 600, 702) zum Erzeugen eines Klangs, der von dem Fahrzeug (320) nach außen ausstrahlt, wobei der Lautsprecher (306, 400, 500, 600, 702) eine Antriebseinheit (402, 520) und eine Membran (403, 530, 603) umfasst, wobei die Antriebseinheit (402, 520) ausgelegt ist, um die Membran (403, 530, 603) entlang einer Bewegungsachse (405, 502) zu bewegen, wobei die Membran (403, 530, 603) eine Vorderseite, die einer Vorwärtsrichtung parallel zur Bewegungsachse (405, 502) zugewandt ist, und eine Rückseite aufweist, die einer Rückwärtsrichtung parallel zur Bewegungsachse (405, 502) zugewandt ist;
wobei der Lautsprecher (306, 400, 500, 600, 702) einen Rahmen (414, 510) umfasst, von dem die Membran (403, 530, 603) durch zumindest eine Aufhängung abgehängt ist;
wobei die zumindest eine Aufhängung eine Einfassung (407, 410, 412, 560, 610) umfasst, die an einem Umfang der Membran (403, 530, 603) angeordnet ist; und
wobei die Membran (403, 530, 603) und die Einfassung (407, 410, 412, 560, 610) aus einem einzelnen Materialstück ausgebildet sind;
wobei der Lautsprecher (306, 400, 500, 600, 702) ausgelegt ist, um als Reaktion darauf, dass der Hupenaktivierungsmechanismus (302) durch einen Benutzer des Fahrzeugs (320) betätigt wird, einen hörbaren Warnklang basierend auf einem Audiosignal zu erzeugen, das einen Scheitelfaktor aufweist, der unter einem vorbestimmten Schwellenwert von 6 dB oder darunter liegt.

2. Hupenvorrichtung (300) nach Anspruch 1, wobei das Audiosignal ausgelegt ist, um einen Einton- oder Mehrton-Fahrzeughupenklang zu imitieren.

3. Hupenvorrichtung (300) nach einem der vorangegangenen Ansprüche, wobei das Audiosignal zwei Grundfrequenzen und Oberschwingungen davon umfasst, wobei die zwei Grundfrequenzen durch nicht mehr als eine halbe Oktave getrennt sind.

4. Hupenvorrichtung (300) nach einem der vorangegangenen Ansprüche, wobei das Audiosignal einen Scheitelfaktor von 3 dB oder weniger aufweist, wenn es in digitaler Form gespeichert ist.

5. Hupenvorrichtung (300) nach einem der vorangegangenen Ansprüche, wobei die Hupenvorrichtung (300) ausgelegt ist, damit der Scheitelfaktor des Audiosignals, wenn dieser an den Anschlüssen des Lautsprechers (306, 400, 500, 600, 702) gemessen wird, 6 dB oder weniger beträgt.

6. Hupenvorrichtung (300) nach einem der vorangegangenen Ansprüche, wobei nicht mehr als drei der 1/3-Oktavenbandpegel für das Audiosignal in dem Frequenzbereich 400 Hz bis 10 kHz von dem durchschnittlichen Pegel über den 1/3-Oktavenbanden in dem Frequenzbereich 400 Hz bis 10 kHz um mehr als +- 15 dB abweichen.

7. Hupenvorrichtung (300) nach einem der vorangegangenen Ansprüche, wobei die Hupenvorrichtung (300) ausgelegt ist, um als ein akustisches Fahrzeugwarnsystem (AVAS) zu fungieren.

8. Hupenvorrichtung (300) nach einem der vorangegangenen Ansprüche, wobei die längste Abmessung der Einfassung (407, 410, 412, 560, 610) und der Membran (403, 530, 603) in einer Richtung normal auf die Bewegungsachse (405, 502) 200 mm oder weniger beträgt.

9. Hupenvorrichtung (300) nach einem der vorangegangenen Ansprüche, wobei die Hupenvorrichtung (300) ausgelegt ist, um das Audiosignal an dem Lautsprecher (306, 400, 500, 600, 702) als eine Spannungswellenform bereitzustellen, die eine Spitzenspannung von nicht mehr als 20 V aufweist.

10. Hupenvorrichtung (300) nach einem der vorangegangenen Ansprüche, wobei das einzelne Materialstück einen einschichtigen Gewebestoff aus orthogonal gewebten Fasern und einem duroplastischen Harz umfasst.

11. Hupenvorrichtung (300) nach einem der vorangegangenen Ansprüche, wobei das einzelne Materialstück ein Polymer umfasst.

12. Hupenvorrichtung (300) nach einem der vorangegangenen Ansprüche, wobei die Membran (403, 530, 603) sich tangential erstreckende Falten am Umfang der Membran (403, 530, 603) umfasst.

13. Hupenvorrichtung (300) nach einem der vorangegangenen Ansprüche, wobei das einzelne Materialstück eine spezifische Masse im Bereich von 50 g/m² bis 500 g/m² aufweist.

14. Hupenvorrichtung (300) nach einem der vorangegangenen Ansprüche, wobei das einzelne Materialstück eine Dicke im Bereich von 0,03 bis 0,6 mm aufweist.

15. Hupenvorrichtung (300) nach einem der vorangegangenen Ansprüche, wobei der E-Modul des einzelnen Materialstücks im Bereich von 2 bis 15 GPa beträgt.

16. Hupenvorrichtung (300) nach einem der vorangegangenen Ansprüche, die ferner einen inneren Aufhängungsabschnitt (550) umfasst, wobei sich die Membran (403, 530, 603) zwischen dem inneren Aufhängungsabschnitt (550) und der Einfassung (407, 410, 412, 560, 610) erstreckt, und wobei der innere Aufhängungsabschnitt (550) einstückig mit der Membran (403, 530, 603) ausgebildet ist.

## Revendications

1. Dispositif d'avertisseur sonore (300) pour un véhicule (320), le dispositif d'avertisseur sonore (300) incluant :
un mécanisme d'activation d'avertisseur sonore (302) pouvant être actionné par un utilisateur du véhicule (320) ;
un haut-parleur (306, 400, 500, 600, 702) pour produire un son qui rayonne vers l'extérieur à partir du véhicule (320), dans lequel le haut-parleur (306, 400, 500, 600, 702) inclut une unité d'entraînement (402, 520) et un diaphragme (403, 530, 603), dans lequel l'unité d'entraînement (402, 520) est configurée pour déplacer le diaphragme (403, 530, 603) le long d'un axe de déplacement (405, 502), dans lequel le diaphragme (403, 530, 603) présente une face avant qui est orientée dans une direction vers l'avant parallèle à l'axe de déplacement (405, 502) et une face arrière qui est orientée dans une direction vers l'arrière parallèle à l'axe de déplacement (405, 502) ;
dans lequel le haut-parleur (306, 400, 500, 600, 702) inclut un cadre (414, 510) auquel le diaphragme (403, 530, 603) est suspendu par l'intermédiaire d'au moins une suspension ;
dans lequel la au moins une suspension inclut un entourage (407, 410, 412, 560, 610) qui est situé au niveau d'un périmètre du diaphragme (403, 530, 603) ; et
dans lequel le diaphragme (403, 530, 603) et le contour (407, 410, 412, 560, 610) sont formés d'une seule pièce de matériau ;
dans lequel le haut-parleur (306, 400, 500, 600, 702) est configuré pour produire un son d'avertissement audible sur la base d'un signal audio qui présente un facteur de crête qui est inférieur à un seuil prédéterminé de 6 dB ou moins, en réponse au mécanisme d'activation d'avertisseur sonore (302) actionné par un utilisateur du véhicule (320).

2. Dispositif d'avertisseur sonore (300) selon la revendication 1, dans lequel le signal audio est configuré pour imiter un son d'avertisseur sonore de véhicule à tonalité unique ou à tonalités multiples.

3. Dispositif d'avertisseur sonore (300) selon l'une quelconque des revendications précédentes, dans lequel le signal audio inclut deux fréquences fondamentales et des harmoniques de celui-ci, dans lequel les deux fréquences fondamentales ne sont pas séparées de plus d'une demi-octave.

4. Dispositif d'avertisseur sonore (300) selon l'une quelconque des revendications précédentes, dans lequel le signal audio présente un facteur de crête de 3 dB ou moins lorsqu'il est stocké sous forme numérique.

5. Dispositif d'avertisseur sonore (300) selon l'une quelconque des revendications précédentes, dans lequel le dispositif d'avertisseur sonore (300) est configuré de telle sorte que le facteur de crête du signal audio, lorsqu'il est mesuré aux bornes du haut-parleur (306, 400, 500, 600, 702) est de 6 dB ou moins.

6. Dispositif d'avertisseur sonore (300) selon l'une quelconque des revendications précédentes, dans lequel pas plus de trois des niveaux de bande de 1/3 d'octave pour le signal audio dans la plage de fréquences de 400 Hz à 10 kHz ne s'écartent du niveau moyen à travers les bandes de 1/3 d'octave dans la plage de fréquences de 400 Hz à 10 kHz de plus de +-15 dB.

7. Dispositif d'avertisseur sonore (300) selon l'une quelconque des revendications précédentes, dans lequel le dispositif d'avertisseur sonore (300) est configuré pour fonctionner comme un système d'alerte de véhicule acoustique (AVAS).

8. Dispositif d'avertisseur sonore (300) selon l'une quelconque des revendications précédentes, dans lequel la dimension la plus longue du contour (407, 410, 412, 560, 610) et du diaphragme (403, 530, 603) dans une direction perpendiculaire à l'axe de déplacement (405, 502) est de 200 mm ou moins.

9. Dispositif d'avertisseur sonore (300) selon l'une quelconque des revendications précédentes, dans lequel le dispositif d'avertisseur sonore (300) est configuré pour fournir le signal audio au haut-parleur (306, 400, 500, 600, 702) sous la forme d'une forme d'onde de tension présentant une tension de crête ne dépassant pas 20 V.

10. Dispositif d'avertisseur sonore (300) selon l'une quelconque des revendications précédentes, dans lequel la pièce unique de matériau comprend un tissu tissé monocouche de fibres tissées orthogonales et une résine thermodurcissable.

11. Dispositif d'avertisseur sonore (300) selon l'une quelconque des revendications précédentes, dans lequel la pièce unique de matériau comprend un polymère.

12. Dispositif d'avertisseur sonore (300) selon l'une quelconque des revendications précédentes, dans lequel le diaphragme (403, 530, 603) inclut des plis s'étendant tangentiellement au niveau du périmètre du diaphragme (403, 530, 603).

13. Dispositif d'avertisseur sonore (300) selon l'une quelconque des revendications précédentes, dans lequel la pièce unique de matériau présente une masse spécifique dans la plage de 50 g/m² à 500 g/m².

14. Dispositif d'avertisseur sonore (300) selon l'une quelconque des revendications précédentes, dans lequel la pièce unique de matériau présente une épaisseur dans la plage de 0,03 à 0,6 mm.

15. Dispositif d'avertisseur sonore (300) selon l'une quelconque des revendications précédentes, dans lequel le module de Young de la pièce unique de matériau est dans la plage de 2 à 15 GPa.

16. Dispositif d'avertisseur sonore (300) selon l'une quelconque des revendications précédentes, comprenant en outre une partie de suspension intérieure (550), dans lequel le diaphragme (403, 530, 603) s'étend entre la partie de suspension intérieure (550) et le contour (407, 410, 412, 560, 610), et la partie de suspension intérieure (550) est d'un seul tenant avec le diaphragme (403, 530, 603).
